# EUROPÄISCHE PATENTSCHRIFT

(11) **EP 0 876 404 B1**
(45) Veröffentlichungstag und Bekanntmachung des Hinweises auf die Patenterteilung: **09.04.2003**
(21) Anmeldenummer: 97902206.8
(22) Anmeldetag: 23.01.1997
(51) Int. Cl.: C08F 2/22, C08F 297/00

(54) **VERFAHREN ZUR HERSTELLUNG EINER WÄSSRIGEN POLYMERISATDISPERSION NACH DER METHODE DER RADIKALISCHEN WÄSSRIGEN EMULSIONSPOLYMERISATION**
PROCESS FOR PREPARING AN AQUEOUS POLYMER DISPERSION BY THE METHOD OF RADICAL AQUEOUS EMULSION POLYMERIZATION
PROCEDE POUR PREPARER UNE DISPERSION POLYMERE AQUEUSE SELON LA METHODE DE LA POLYMERISATION EN EMULSION AQUEUSE RADICALAIRE

(30) Priorität: 25.01.1996 DE 19602538
(43) Veröffentlichungstag der Anmeldung: 11.11.1998
(73) Patentinhaber: BASF AKTIENGESELLSCHAFT, 67056 Ludwigshafen (DE); Max-Planck-Institut, 55128 Mainz (DE)
(72) Erfinder: MATHAUER, Klemens, D-67061 Ludwigshafen (DE); MÄCHTLE, Walter, D-67067 Ludwigshafen (DE); SCHROF, Wolfgang, D-67271 Neuleiningen (DE); SCHUCH, Horst, D-68549 Ilvesheim (DE); RAGER, Timo, D-55118 Mainz (DE); MEYER, Wolfgang, D-55129 Mainz (DE); WEGNER, Gerhard, D-55127 Mainz (DE)
(86) Internationale Anmeldenummer: EP9700308
(87) Internationale Veröffentlichungsnummer: WO97027222

(56) Entgegenhaltungen:
- EP-A- 0 597 567
- US-A- 4 219 627

## Beschreibung

Vorliegende Erfindung betrifft ein Verfahren zur Herstellung einer wäßrigen Polymerisatdispersion durch Polymerisation von wenigstens eine Vinylgruppe aufweisenden Monomeren nach der Methode der radikalischen wäßrigen Emulsionspolymerisation, bei dem man dem Polymerisationsgefäß vor und/oder während der Polymerisation eine amphiphile Substanz zusetzt.

Wäßrige Polymerisatdispersionen (Latices) sind allgemein bekannt. Es handelt sich um fluide Systeme, die als disperse Phase in wäßrigem Dispergiermedium aus mehreren ineinander verschlungenen Polymerisatketten bestehende Polymerisatknäuel (sogenannte Polymerisatteilchen) in disperser Verteilung befindlich enthalten.

Der Durchmesser der Polymerisatteilchen liegt häufig im Bereich von 10 nm bis 2000 nm.

Ebenso wie Polymerisatlösungen beim Verdampfen des Lösungsmittels, weisen wäßrige Polymerisatdispersionen beim Verdampfen des wäßrigen Dispergiermediums das Potential zur Ausbildung von Polymerisatfilmen auf, weshalb sie insbesondere als Bindemittel, z.B. für Anstrichfarben oder für Massen zum Beschichten von Leder, Papier oder Kunststoffolien Anwendung finden. Aufgrund ihrer umweltfreundlichen Eigenschaften gewinnen sie zunehmend an Bedeutung.

Ein wesentliches Merkmal wäßriger Polymerisatdispersionen ist der Durchmesser der in disperser Verteilung befindlichen Polymerisatteilchen, da eine Reihe anwendungstechnischer Eigenschaften wäßriger Polymerisatdispersionen durch die Größe der Polymerisatteilchen bzw. durch deren Größenverteilung mitbestimmt wird. Beispielsweise weisen Verfilmungen aus feinteiligen wäßrigen Polymerisatdispersionen einen erhöhten Glanz auf (vgl. z.B. Progress in Organic Coatings 6 (1978), S. 22). Ferner ist das Eindringvermögen feinteiliger wäßriger Polymerisatdispersionen in poröse, aber dennoch relativ dichte Substrate wie Papier, Leder oder einen Putzuntergrund im Vergleich mit grobteiligen wäßrigen Polymerisatdispersionen erhöht (z.B. Dispersionen synth. Hochpolymerer, Teil II, Anwendung, H. Reinhard, Springer-Verlag. Berlin (1969), Seite 4).

Andererseits weisen grobteilige wäßrige Polymerisatdispersionen bei sonst gleicher Zusammensetzung und Feststoffkonzentration z.B. einen geringeren Fließwiderstand als feinteilige wäßrige Polymerisatdispersionen auf (z.B. Dispersionen synth. Hoch-polymerer, Teil II, Anwendung, H. Reinhard, Springer-Verlag, Berlin (1969), Seite 5). Ein vorteilhaftes Fließverhalten weisen auch wäßrige Polymerisatdispersionen auf, deren Polymerisatteilchendurchmesser über einen größeren Durchmesserbereich verteilt sind (vgl. z.B. DE-A 42 13 965).

Eine zentrale Rolle im Rahmen der Herstellung einer wäßrigen Polymerisatdispersion kommt daher der gezielten, für den jeweiligen Verwendungszweck maßgeschneiderten, reproduzierbaren Einstellung der Durchmesser der dispergierten Polymerisatteilchen zu.

Die wichtigste Methode zur Herstellung wäßriger Polymerisatdispersionen bildet die Methode der radikalischen Emulsionspolymerisation, insbesondere die der radikalischen wäßrigen Emulsionspolymerisation.

Bei letzterer Methode werden üblicherweise wenigstens eine Vinylgruppe aufweisende Monomere unter der Einwirkung von im wäßrigen Medium gelösten radikalischen Polymerisationsinitiatoren radikalisch zu unmittelbar im wäßrigen Dispergiermedium in disperser Verteilung befindlichen Polymerisatteilchen polymerisiert. Die nach der Methode der radikalischen wäßrigen Emulsionspolymerisation hergestellten wäßrigen Polymerisatdispersionen werden üblicherweise auch als wäßrige Primärdispersionen bezeichnet, um sie von den sogenannten wäßrigen Sekundärdispersionen zu unterscheiden. Bei letzteren erfolgt die Polymerisation in nicht wäßrigem Medium. Die Dispergierung ins wäßrige Medium erfolgt erst nach beendeter Polymerisationsreaktion.

Die zu polymerisierenden Monomeren werden dabei im wäßrigen Medium unter Ausbildung einer wäßrigen Monomerenemulsion tröpfchenförmig (der Tröpfchendurchmesser beträgt häufig 2 bis 10 µm) verteilt. Diese Monomerentröpfchen bilden jedoch nicht die Polymerisationsorte sondern fungieren lediglich als Monomerenreservoir. Die Ausbildung der Polymerisationsorte findet vielmehr in der wäßrigen Phase statt, die stets einen begrenzten Anteil der zu polymerisierenden Monomeren sowie den radikalischen Polymerisationsinitiator gelöst enthält. Durch chemische Reaktion dieser in Lösung befindlichen Reaktionspartner kommt es zur Ausbildung von Oligomerradikalen, die oberhalb einer kritischen Kettenlänge als Primärteilchen ausfallen (homogene Nukleierung). Die Bildung von Primärteilchen erfolgt vermutlich bis zu dem Punkt, an dem die Bildungsgeschwindigkeit der Radikale in der wäßrigen Phase ebenso groß ist wie die Geschwindigkeit ihres Verschwindens infolge des Radikaleinfangs durch bereits gebildete Polymerisatteilchen. An diese Polymerisatteilchenbildungsphase schließt sich dann die Polymerisatteilchenwachstumsphase an. D.h., aus den als Reservoir fungierenden Monomerentröpfchen diffundieren die zu polymerisierenden Monomeren über die wäßrige Phase zu den gebildeten Primärteilchen (deren Anzahl und Oberfläche sehr viel größer als diejenige der Monomerentröpfchen ist), um in selbige einpolymerisiert zu werden (vgl. z.B. Faserforschung und Textiltechnik 28 (1977), Heft 7, Zeitschrift für Polymerforschung S. 309). Durch kontrollierten Zusatz geeigneter Dispergiermittel werden sowohl die disperse Verteilung der Monomerentröpfchen als auch die disperse Verteilung der gebildeten Polymerisatteilchen gegebenenfalls stabilisiert.

Während der Prozeß des Polymerisatteilchenwachstums normalerweise systematisch verläuft, ist die Polymerisatteilchenbildung im wesentlichen ein stochastischer Prozeß. D.h., die Anzahl der gebildeten Polymerisatprimärteilchen und damit die Durchmesser der letztlich nach Abschluß der Polymerisation resultierenden Polymerisatendteilchen fluktuieren von Polymerisationsansatz zu Polymerisationsansatz. In entsprechender Weise schwankt die Produktqualität (die identische Reproduktion gelingt normalerweise nicht). Dies trifft ganz besonders bei einem erhöhten Feststoffvolumengehalt (≥ 50 Vol.-%) der wäßrigen Polymerisatdispersion zu, da z.B. die Viskosität von hochkonzentrierten wäßrigen Polymerisatdispersionen in besonders sensitiver Weise von der Anzahl und Größe der in dispergierter Form enthaltenen Polymerisatteilchen abhängt.

Eine kontrolliertere Durchführung der radikalischen wäßrigen Emulsionspolymerisation ist bekanntermaßen dadurch möglich, daß man sie im Beisein eines im wäßrigen Medium gelösten Tensids auslöst, wobei der Gehalt des wäßrigen Mediums an Tensid so bemessen wird, daß er oberhalb der kritischen Micellbildungskonzentration desselben liegt (vgl. z.B. High Polymers, Vol. IX, Emulsion Polymerization, Interscience Publishers, Inc., New York, Third Printing, 1965, S. 1ff).

Der Begriff Tensid meint dabei amphiphile Substanzen, die beim Lösen in Wasser bis zum Erreichen der kritischen Micellbildungskonzentration die Oberflächenspannung σ des reinen Wassers signifikant (in der Regel um wenigstens 25 %, bezogen auf den σ-Wert von reinem Wasser) zu verringern vermögen ( von lat. tensio = Spannung).

Die Bezeichnung "amphiphil" sagt dabei aus, daß Tenside sowohl hydrophile als auch hydrophobe Gruppierungen aufweisen. Hydrophile Gruppierungen sind solche, die in die wäßrige Phase hineingezogen werden, während hydrophobe Gruppierungen aus der wäßrigen Phase herausgedrängt werden.

In stark verdünnten wäßrigen Lösungen liegen Tenside daher im wesentlichen als voneinander unabhängige Moleküle molekular gelöst vor, wobei ihr amphiphiler Aufbau eine Anreicherung an der Wasseroberfläche als orientierte Adsorption bedingt, die die Verringerung der Oberflächenspannung bewirkt.

In konzentrierten wäßrigen Lösungen liegen Tenside hingegen überwiegend micellar gelöst vor. D.h., die Tensidmoleküle ordnen sich in der wäßrigen Lösung überwiegend zu höheren Aggregaten, sogenannten Micellen an, in denen sie so orientiert sind, daß die hydrophilen Gruppierungen der wäßrigen Phase zugekehrt sind und die hydrophoben Gruppierungen in das Innere der Micelle weisen. Bei weiterer Steigerung der Tensidkonzentration nimmt im wesentlichen nur noch die Zahl der Micellen in der Volumeneinheit, nicht jedoch die der molekular gelösten Tensidmoleküle je Volumeneinheit zu.

Der Übergang von der wäßrigen molekularen Lösung zur wäßrigen micellaren Lösung erfolgt in Abhängigkeit von der Tensidkonzentration normalerweise relativ abrupt, was in entsprechend abrupten Änderungen der Konzentrationsabhängigkeit zahlreicher makroskopischer Eigenschaften (z.B. der Oberflächenspannung) sichtbar wird und die kritische Micellbildungskonzentration (üblicherweise als molare Konzentration c.m.c. angegeben) definiert (Wendepunkt in der Konzentrationsabhängigkeit der Eigenschaft). Bei Konzentrationen oberhalb der kritischen Micellbildungskonzentration spricht man von micellaren Lösungen. Dabei soll der Begriff "Lösung" zum Ausdruck bringen, daß das optische Erscheinungsbild einer micellaren wäßrigen Tensidlösung ebenso wie das einer molekularen wäßrigen Tensidlösung das einer klaren wäßrigen Lösung ist. Das relative Molekulargewicht von Tensiden beträgt normalerweise < 2000 und in ihren micellaren wäßrigen Lösungen besteht zwischen den verschiedenen molekular und micellar gelöst vorliegenden Tensidanteilen üblicherweise ein rascher Austausch (ein dynamisches Gleichgewicht).

Als typische Beispiele für Tenside seien angeführt (Quelle: Ullmanns Encyclopädie der technischen Chemie, Verlag Chemie, 4. Auflage, Bd. 22, S. 456 ff) :
- a): Perfluornonancarbonsäure(c.m.c. bei 20°C u. 1 atm in Wasser = 10⁻⁵mol/l;
σ der zugehörigen wäßrigen Lösung = 20 mN/m);
- b): Na-1-decylsulfat (c.m.c. bei 20°C u. 1 atm in Wasser = 3,4 · 10⁻² mol/l;
σ der zugehörigen wäßrigen Lösung = 40 mN/m).

Die Oberflächenspannung von reinem Wasser beträgt bei 20°C und 1 atm 73 mN/m.

Es wird nun allgemein angenommen, daß in wäßrigem Medium befindliche tensidische Micellen Keimstätten für die Entstehung von Polymerisatprimärteilchen bilden (man spricht auch von micellarer Nukleierung). Löst man die radikalische wäßrige Emulsionspolymerisation z.B. im Beisein einer großen Anzahl tensidischer Micellen aus, werden viele kleine Polymerisatendteilchen erhalten, während beim Auslösen im Beisein einer geringen Anzahl tensidischer Micellen wenige große Polymerisatendteilchen resultieren. Gleichzeitig verringert das Tensid in der Regel sowohl die Grenzflächenspannung "Polymerisatteilchen/wäßriges Medium" als auch die Grenzflächenspannung "Monomertröpfchen/wäßriges Medium" und vermag so die jeweilige disperse Verteilung als Dispergiermittel zu stabilisieren, was sich auf die radikalische wäßrige Emulsionspolymerisation vorteilhaft auswirkt. Von Nachteil ist hingegen üblicherweise die durch das Tensid bewirkte Abnahme der Oberflächenspannung, die die Neigung zu Schaumbildung erhöht.

Während die Gültigkeit der vorgenannten Zusammenhänge qualitativ zu befriedigen vermag (mit zunehmender Tensidmenge werden kleinere Polyerisatendteilchen erzielt und umgekehrt; vgl. Dispersionen synthetischer Hochpolymerer, Teil I, F. Kölscher, Springer-Verlag, Berlin (1969), Seite 81), ist der quantitative Zusammenhang in der Regel ebenso wenig befriedigend wie die Reproduzierbarkeit.

Die EP-B 40 419 (z.B. S. 5, Zeilen 16 ff und Example 1), die DE-A 23 21 835 (z.B. S. 14, Zeile 9 ff) und die Encyclopedia of Polymer Science and Technology, Vol. 5, John Wiley & Sons Inc., New York (1966), S. 847 empfehlen daher zur gezielten Einstellung der Polymerisatendteilchengröße die Polymerisatteilchenbildungsphase und das Polymerisatteilchenwachstum voneinander zu entkoppeln. D.h., man setzt z.B. vor Beginn der radikalischen wäßrigen Emulsionspolymerisation eine definierte Menge einer getrennt vorgebildeten wäßrigen Polymerisatdispersion (Keim- oder Saat-Polymerisatdispersion) zu und läßt die in dieser Saat enthaltenen Polymerisatteilchen im Verlauf der eigentlichen radikalischen wäßrigen Emulsionspolymerisation nur noch wachsen. Die Durchmesser der Saat-Polymerisatteilchen sowie das Mengenverhältnis von vorgelegten Saat-Polymerisatteilchen und zu polymerisierenden Monomeren bestimmen im wesentlichen die Größe der Polymerisatendteilchen in der resultierenden wäßrigen Polymerisatdispersion. Je feinteiliger die Saat und je größer die eingesetzte Saatmenge desto kleiner sind die resultierenden Polymerisatendteilchen bei gegebener Monomerenmenge. Strebt man eine breite Verteilung der Durchmesser der Polymerisatteilchen an, setzt man dem Polymerisationsgefäß auch während der radikalischen wäßrigen Emulsionspolymerisation der Monomeren zusätzliche Saat-Polymerisatdispersion zu. Auf diese Art und Weise umfaßt die resultierende wäßrige Polymerisatdispersion verschiedene Generationen von bis zu unterschiedlicher Endgröße angewachsenen Saat-Polymerisatteilchen. Eine ähnliche Wirkung läßt sich auch dadurch erzeugen, daß man im Verlauf der radikalischen wäßrigen Emulsionspolymerisation der Monomeren durch erhöhten Tensidzusatz Micellneubildung verursacht.

Nachteilig an der Methode der radikalischen wäßrigen Emulsionspolymerisation unter Zusatz einer wäßrigen Saat-Polymerisatdispersion ist jedoch, daß die wäßrige Saat-Polymerisatdispersion vor ihrem Gebrauch bevorratet werden muß, was aufgrund der prinzipiellen Empfindlichkeit wäßriger Polymerisatdispersionen (sie streben danach ihre Grenzfläche zu verringern) gegenüber Frost, Scherung, Antrocknung und Erschütterung häufig problembehaftet ist. Außerdem erfordert eine identische Produktherstellung an verschiedenen Produktionsstandorten die entsprechende identische Verfügbarkeit einer solchen wäßrigen Saat-Polymerisatdispersion. Ein zusätzliches Problem ist die reproduzierbare Erzeugung einer wäßrigen Saat-Polymerisatdispersion.

Die Aufgabe der vorliegenden Erfindung bestand daher darin, ein Verfahren zur Herstellung einer wäßrigen Polymerisatdispersion durch Polymerisation von wenigstens eine Vinylgruppe aufweisenden Monomeren nach der Methode der radikalischen wäßrigen Emulsionspolymerisation zur Verfügung zu stellen, das in qualitativ vergleichbarer Weise wie die Saat-Fahrweise eine kontrollierte Durchführung der radikalischen wäßrigen Emulsionspolymerisation ermöglicht, jedoch die Nachteile der Saat-Bevorratung nicht aufweist.

Demgemäß wurde ein Verfahren zur Herstellung eine wäßrigen Polymerisatdispersion durch Polymerisation von wenigstens eine Vinylgruppe aufweisenden Monomeren nach der Methode der radikalischen wäßrigen Emulsionspolymerisation gefunden, bei dem man dem Polymerisationsgefäß vor und/oder während der Polymerisation eine amphiphile Substanz zusetzt, die dadurch gekennzeichnet ist, daß
- 1 l Wasser bei 20°C und 1 atm wenigstens 10⁻⁴ mol der amphiphilen Substanz in micellarer Lösung aufzunehmen vermag;
- die kritische Micellbildungskonzentration der amphiphilen Substanz bei 20°C und 1 atm in Wasser < 10⁻⁶ mol/l beträgt und
- die Oberflächenspannung σ einer wäßrigen molekularen und/oder micellaren Lösung der amphiphilen Substanz im molaren Konzentrationsbereich (0 < C_{M} ≤ 10⁻⁴)mol/l bei 20°C und 1 atm den Wert 60 mN/m nicht unterschreitet und daß sie ein Blockcopolymer ist.

Vorzugsweise beträgt die c.m.c. der erfindungsgemäß zu verwendenden amphiphilen Substanz bei 20°C und 1 atm in Wasser ≤ 10^{-6,25} mol/l, besser ≤ 10^{-6,5} mol/l, besonders bevorzugt ≤ 10^{-6,75} mol/l, besser ≤ 10^{-7,0} mol/l, ganz besonders bevorzugt ≤ 10^{-7,25} mol/l und noch besser ≤ 10^{-7,5} mol/l.

Ferner ist es günstig, wenn die Oberflächenspannung σ einer wäßrigen molekularen und/oder micellaren Lösung der erfindungsgemäß zu verwendenden amphiphilen Substanz im molaren Konzentrationsbereich (0 < C_{M} ≤ 10⁻⁴)mol/l bei 20°C und 1 atm den Wert 62,5 mN/m, bevorzugt den Wert 65 mN/m, besonders bevorzugt den Wert 67,5 mN/m, ganz besonders bevorzugt den Wert 70 mN/m und noch besser den Wert 71,5 mN/m nicht unterschreitet. Vorzugsweise werden vorgenannte Werte auch bis zum Erreichen einer molaren Konzentration von 10⁻³ mol/l nicht unterschritten.

Weiterhin ist es günstig, wenn die erfindungsgemäß zu verwendende amphiphile Substanz so beschaffen ist, daß 1 l Wasser bei 20°C und 1 atm wenigstens 10⁻³ mol, vorzugsweise wenigstens 10⁻² mol und besonders bevorzugt wenigstens 10⁻¹ mol bzw. 1 mol der amphiphilen Substanz in micellarer Lösung aufzunehmen vermag.

Die Grundlage der vorliegenden Erfindung bildet die Beobachtung, daß nicht nur Tenside, d.h. niedermolekulare amphiphile Substanzen, die die Oberfächenspannung des Wassers signifikant zu verringern vermögen, oberhalb einer c.m.c. zur Ausbildung micellarer wäßriger Lösungen befähigt sind, sondern daß diese Eigenschaft amphiphilen Substanzen im wesentlichen ganz allgemein zugeschrieben werden kann.

Dabei gilt, daß die c.m.c. im wesentlichen durch die Art der hydrophoben Gruppierungen der amphiphilen Substanz bestimmt wird, wobei innerhalb einer homologen Reihe die c.m.c. mit zunehmender Ausdehnung (z.B. zunehmende Länge (Anzahl C-Atome) der Alkyl-gruppe) der hydrophoben Gruppierung geringere Werte annimmt. Der Einfluß der hydrophilen Gruppierung auf die c.m.c. ist demgegenüber vergleichsweise gering.

Gleichzeitig verlangsamt sich die Austauschgeschwindigkeit zwischen den verschiedenen molekular bzw. micellar gelöst vorliegenden Anteilen in wäßrigen micellaren Lösungen amphiphiler Substanzen mit zunehmender Ausdehnung der hydrophoben Gruppierung, was dazu führen kann, daß sich der dynamische Gleichgewichtszustand zwischen den verschiedenen Anteilen erst nach verhältnismäßig langer Zeit oder nur bei erhöhter Temperatur einstellt. Damit einher geht in der Regel eine Abnahme des im Gleichgewichtszustand molekular gelöst vorliegenden Anteils, was sich in einer verminderten Fähigkeit zur Verringerung der Oberflächenspannung ausweist.

Die Erklärung für vorgenannte Beobachtungen dürfte sein, daß die attraktive Wechselwirkung der hydrophoben Gruppierungen untereinander mit ihrer Ausdehnung stärker zunimmt als ihre attraktive Wechselwirkung mit der wäßrigen Phase, weshalb sie mit zunehmender Ausdehnung verstärkt aus der wäßrigen Phase herausgedrängt und in eine Aggregat-(Micell-)bildung (mit zunehmender Verweilzeit in selbiger) gezwungen werden. Die Art der hydrophilen Gruppierung entscheidet im wesentlichen lediglich darüber, ob das Aggregat in Lösung gehalten werden kann oder nicht.

Mit anderen Worten handelt es sich bei den erfindungsgemäß zuzusetzenden amphiphilen Substanzen um solche, deren in ihrer micellaren wäßrigen Lösung molekular gelöst vorliegender Anteil besonders gering ist und bei denen der Austausch zwischen den verschiedenen micellar bzw. molekular gelöst vorliegenden Anteilen in ihren micellaren wäßrigen Lösungen besonders langsam (erhöhte kinetische Stabilität) erfolgt.

Gemäß eigenen Untersuchungen eignen sich nun micellare wäßrige Lösungen der erfindungsgemäß zuzusetzenden amphiphilen Substanzen in besonderer Weise als Keimstätten zur kontrollierten Durchführung radikalischer wäßriger Emulsionspolymerisationen von wenigstens eine Vinylgruppe aufweisenden Monomeren.

Der Unterschied zu den micellaren wäßrigen Lösungen der klas-sischen Tenside ist dabei vermutlich folgender. Wird im Beisein klassischer wäßriger micellarer Systeme mit Beginn der radikalischen wäßrigen Emulsionspolymerisation in einigen Micellen eine Polymerisatteilchenbildung ausgelöst, beginnen sich (aufgrund des raschen Austauschs) andere noch nicht initiierte Micellen aufzulösen, um die Oberfläche der wachsenden Polymerisatteilchen mitzustabilisieren, wodurch der quantitative Zusammenhang zwischen ursprünglich vorhandener Anzahl an Micellen und gebildeter Anzahl von Polymerisatteilchen verloren geht.

Mit zunehmender kinetischer Stabilität der Micellen verringert sich das Erscheinungsbild der micellaren Auflösung im Verlauf der Ausbildung der Polymerisatteilchen und die Polymerisatteilchenbildungsphase nähert sich zunehmend dem Grenzfall, bei dem jede ursprünglich vorhandene Micelle Keimstätte eines Polymerisatteilchens wird (mit zunehmender kinetischer Stabilität der Micellen wächst in der Regel auch deren Stabilität gegenüber Zusatz von Fremdelektrolyt). D.h., mit zunehmender kinetischer micellarer Stabilität vermag eine wäßrige micellare Lösung auf den Ablauf einer radikalischen wäßrigen Emulsionspolymerisation zunehmend so zu wirken wie eine wäßrige Saat-Polymerisatdispersion. Im Unterschied zu letzterer kann sie jedoch in reproduzierbarer Weise erzeugt und trocken bevorratet werden, was die Nachteile einer Saat-Polymerisatdispersionsbevorratung ausschließt.

Im einfachsten Fall läßt sich im Verlauf einer radikalischen wäßrigen Emulsionspolymerisation die gewünschte micellare Wirkung der erfindungsgemäß zuzusetzenden amphiphilen Substanz dadurch erzeugen, daß man die amphiphile Substanz dem wäßrigen Polymerisationsmedium als solche in einer oberhalb der c.m.c. liegenden Menge zusetzt. In der Regel wird man die erfindungsgemäß zuzusetzende amphiphile Substanz jedoch in Gestalt einer vorgebildeten micellaren Lösung zusetzen (als Lösungsmittel kommt sowohl Wasser als auch ein mit Wasser mischbares organisches Lösungsmittel bzw. ein Gemisch aus Wasser und solch einem Lösungsmittel in Betracht).

Die gilt insbesondere dann, wenn die amphiphile Substanz mit Wasser unter Normalbedingungen (1 atm, 20°C) auf direktem Weg keine wäßrige micellare Lösung zu bilden vermag. In diesen Fällen gelingt die Herstellung einer micellaren wäßrigen Lösung häufig dadurch, daß man die erfindungsgemäß zuzusetzende amphiphile Substanz zunächst in einem mit Wasser mischbaren organischen Lösungsmittel bzw. in einem Gemisch aus Wasser und einem solchen organischen Lösungsmittel molekular und/oder micellar löst (z.B. in Dioxan, Tetrahydrofuran oder deren Gemischen mit Wasser) und diese molekulare und/oder micellare Lösung (die erfindungsgemäß häufig auch unmittelbar ins wäßrige Polymerisationsmedium zugesetzt werden kann) anschließend z.B. via Dialyse oder mehrfachem Zusatz kleiner Wassermengen und nachfolgender destillativer Abtrennung des verwendeten organischen Lösungsmittels in eine wäßrige micellare Lösung wandelt (anstelle von Wasser wird häufig auch eine wäßrige Lösung einer Säure und/oder Base angewendet) und selbige gegebenenfalls durch Verdampfen von Wasser aufkonzentriert. Solchermaßen bei 1 atm und 20°C erzeugte wäßrige micellare Lösungen befinden sich in der Regel nicht im thermodynamischen Gleichgewicht. Sie sind normalerweise jedoch von erhöhter kinetischer Stabilität, d.h., die darin gelöst enthaltenen Micellen verhalten sich wie quasi - molekulare Gebilde zwischen denen nahezu kein Austausch mehr stattfindet. Die mittlere Verweilzeit eines amphiphilen Moleküls in solchen Micellen kann sich selbst bei erhöhten Temperaturen auf mehrere Stunden oder Tage erstrekken. Inwieweit solche wäßrigen micellaren Lösungen überhaupt noch eine c.m.c. aufweisen, muß vielfach offen bleiben. Wenn ja, liegt sie bei sehr niedrigen Konzentrationen. Solche, meist nur auf indirektem Weg zu erzeugenden und nicht im thermodynamischen Gleichgewicht befindlichen, wäßrigen micellaren Lösungen werden in der Literatur häufig als Lösungen "gefrorener" Micellen bezeichnet (vgl. z.B. Polymer Preprints 32 (1), 525 (1991), Makromol. Chem. Macromol. Symp. 58, 195-199 (1992) oder Langmuir 1993, 9, 1741-1748). Sie verändern ihr makroskopisches Erscheinungsbild in der Regel über mehrere Tage nicht (bei 20°C und 1 atm). Auf dem Weg der direkten Lösung amphiphiler Substanzen sind wäßrige micellare Lösungen entsprechender kinetischer Stabilität eher selten erhältlich.

Insbesondere wäßrige Lösungen "gefrorener" Micellen von erfindungsgemäß zuzusetzenden amphiphilen Substanzen können anstelle wäßriger Saat-Polymerisatdispersionen zur kontrollierten Durchführung radikalischer wäßriger Emulsionspolymerisationen verwendet werden (sie können dabei als solche zugesetzt oder unter Umständen auch im wäßrigen Polymerisationsmedium in situ erzeugt werden, in dem man z.B. eine Lösung der erfindungsgemäß zuzusetzenden amphiphilen Substanz in einem mit Wasser mischbaren organischen Lösungsmittel ins wäßrige Polymerisationsmedium zusetzt). Durch Verdünnung wäßriger Lösungen "gefrorener" Micellen können dabei aufgrund deren kinetischer Stabilität wäßrige micellare Lösungen erzeugt und erfindungsgemäß verwendet werden, deren Konzentration an amphiphiler Substanz unterhalb deren c.m.c. liegt.

Zur Bestimmung der in wäßriger Lösung bei sehr geringen Kon-zentrationen liegenden c.m.c. der erfindungsgemäß zuzusetzenden amphiphilen Substanzen ist die Oberflächenspannung der wäßrigen Lösungen in der Regel keine geeignete Meßgröße mehr.

Die in dieser Schrift verwendeten c.m.c. Angaben beziehen sich daher auf Untersuchungen der Konzentrationsabhängigkeit des Streuverhaltens (Classical Light Scattering From Polymer Solutions, Pavel Kratochvil, Elsevier, New York (1987), insbesondere Kap. 2.1.2) der relevanten wäßrigen Lösungen (klassische Lichtstreuung; Price, C. Pure Appl. Chem. 1983, 55, 1563; Price, C.; Chan, E.K.M.; Stubbersfield, R.B. Eur. Polym. J. 1987, 23, 649 und Price, C.; Stubbersfield, R.B.; El-Kafrawy, S.; Kendall, K.D. Br. Polym. J. 1989, 21, 391) bzw., soweit die Empfindlichkeit dieser Untersuchungsmethode nicht ausreichend ist, auf Untersuchungen des Fluoreszenzverhaltens von hydrophoben Farbstoffen wie Fluorol®7GA oder Pyren, die sich im hydrophoben Innenbereich der Micellen anreichern und dabei ihr Fluoreszenzverhalten ändern (Zhao, C.L.; Winnik, M.A.; Riess, G.; Croucher, M.D. Langmuir 1990, 6, 514; Wilhelm, M.; Zhao, C.L.; Wang, Y.; Xu, R.; Winnik, M.A. Macromolecules 1991, 24, 1033; Astafieva, I.; Zhong, X.F.; Eisenberg, A. Macromolecules 1993, 26, 7339 und Astafieva, I.; Khongaz K.; Eisenberg A., Macromolecules 1995, 28, 7127).

Blockpolymere, von denen wenigstens einer der enthaltenen Blöcke (hydrophile Gruppierung) als eigenständiges Polymer sehr gut und wenigstens ein anderer der enthaltenen Blöcke (hydrophobe Gruppierung) als eigenständiges Polymer nur wenig wasserlöslich ist, bilden einen besonders übersichtlichen Typ amphiphiler Substanzen.

Die bisherigen Ausführungen erhellen deshalb in besonders offensichtlicher Weise anhand einer näheren Betrachtung solcher amphiphiler Blockpolymere, insbesondere im Fall der Di-Blockpolymere.

Der Begriff Blockpolymer steht dabei für Polymere, deren Moleküle (anstelle des Begriffs Molekül wird im Zusammenhang mit micellbildenden amphiphilen Substanzen in der Literatur auch häufig der allgemeinere Begriff "Unimer" verwendet, um die individuelle Spezies von deren micellarer Aggregation begrifflich abzugrenzen, da der Begriff Molekül strenggenommen z.B. Polyelektrolyt-Typen nicht umfaßt) aus, vorzugsweise linear, verknüpften Blöcken bestehen, wobei die Blöcke direkt oder durch konstitutionelle Einheiten, die nicht Teil der Blöcke sind, miteinander verbunden sind und wobei der Begriff Block einen Abschnitt eines Polymermoleküls (Unimeren) meint, der mehrere identische konstitutionelle Einheiten umfaßt und mindestens ein konstitutionelles oder konfiguratives Merkmal besitzt, das in den unmittelbar angrenzenden Abschnitten nicht auftritt. Di-Blockpolymere bestehen demgemäß aus zwei Blöcken.

In einfacher Weise sind Blockpolymere dadurch erhältlich, daß man zunächst eine Sorte von monomeren Bausteinen sukzessive aneinanderreihend miteinander verknüpft, anschließend diese Verknüpfung mit einer anderen Sorte von monomeren Bausteinen fortsetzt, nachfolgend gegebenenfalls weitere Wechsel der monomeren Bausteinsorte durchführt und so nach Bedarf Di-, Tri- und höhere Blockpolymere erzeugt. Ausgehend von wenigstens eine Vinylgruppe aufweisenden monomeren Bausteinen kann die Verknüpfung sowohl innerhalb des einzelnen Blocks als auch zwischen den Blöcken z.B. in an sich bekannter Weise durch initiierte Polymerisation erfolgen (Stichwort: "living polymers"; vgl. z.B. Ullmanns Encyklopädie der technischen Chemie, Bd. 13, 4. Auflage, Verlag Chemie, New York, S. 599). Die initiierte Polymerisation wird dabei in an sich bekannter Weise so gestaltet, daß man nach vollständigem Verbrauch einer Monomerensorte entweder noch aktive oder durch geeignete Maßnahmen wieder aktivierbare Makroinitiatoren erhält, die nach Zugabe der nächsten Monomerensorte weiterwachsen, bis ihre Aktivität durch Zugabe geeigneter Inhibitoren bewußt gelöscht wird.

Eine besonders häufig angewandte Methode einer solchen initiierten sequentiellen Polymerisation ist die sequentielle anionische Polymerisation ( vgl. z.B. US-A 3 251 905; US-A 3 390 207; US-A 3 598 887; US-A 4 219 627; Macromolecules 1994, 27, 4908; Polymer, 1991, Volume 32, Number 12, 2279; Macromolecules 1994, 27, 4615; Macromolecules 1994, 27, 4635 und Macromolecules 1991, 24, 4997). Sie verläuft wie die radikalisch initiierte Polymerisation nach dem Schema einer Kettenreaktion. Als Initiator fungiert jedoch kein Starter-Radikal sondern ein Starter-Anion, das seine Ladung an das wachsende Makromolekül abgibt, welches so seinerseits als Starter-Anion zu wirken und weiter zu wachsen vermag. Verläuft die Startreaktion im Vergleich zur Wachstumsreaktion sehr schnell, sind sehr enge Molekularmassenverteilungen erhältlich.

Ist ein wenigstens eine ethylenisch ungesättigte Gruppe aufweisendes Monomer nicht anionisch polymerisierbar, so kann die Verfahrensweise dahingehend abgeändert werden, daß man z.B. radikalisch oder kationisch initiert weiterpolymerisiert. Die Übergangsmöglichkeiten von anionischer Polymerisation auf anders initiierte Wachstumsmechanismen sind beispielsweise beschrieben in: P. Rempp, E. Franta, J.E. Herz, Advances in Polymer Science 1988, S. 164-168.

Aber auch der Anschluß von durch anionisch initiierte Polymerisation erzeugten Blöcken an Blöcke, die nur durch Polykondensation oder Polyaddition monomerer Bausteine erhältlich sind (z.B. Polyester oder Polyurethane) ist möglich, indem beispiels-weise ein mit einer geeigneten funktionellen Endgruppe versehener anionisch erzeugter Block bei einer Polykondensation zugegeben wird (z.B. R.N. Young, R.P. Quirk, L.J. Fetters, Advances in Polymer Science, Vol. 56, S. 70, 1984). Wilhelm, M. et al. Macromolecules, 1991, 24, 1033, betrifft z.B. Polystyrol-Polyethylenoxid-Di-Blockpolymere. Die Herstellung von Blockpolymeren durch radikalische Polymerisation mit Hilfe von funktionellen Initiatoren oder Makroinitiatoren beschreiben z.B. B. Riess, G. Hurtrez, P. Bahadur in "Encyclopedia of Polymer Science and Engineering", Vol. 2, 327-330, Wiley & Sons (1985).

Die US-A 4 581 429, US-A 5 322 912 und US-A 5 412 047 beschreiben die Herstellung von Blockpolymeren via pseudo-lebender radikalischer Polymere. Diese Verfahrensweise ist im wesentlichen auf alle wenigstens eine ethylenisch ungesättigte Gruppe aufweisenden Monomeren anwendbar und ermöglicht auch die Herstellung von Blockpolymeren mit besonders einheitlichem Molekulargewicht.

Selbstverständlich können aus Blockpolymeren durch nachfolgende chemische Umsetzungen (z.B. polymeranaloge Umsetzungen) andere Blockpolymere hergestellt werden.

Polymer Preprints (Am. Chem. Soc. Div. Polym. Chem.) 29 (1988), 425-426 betrifft z.B. Di-Blockpolymere, die durch anionische sequentielle Polymerisation von zunächst einem Alkylester der Methacrylsäure und nachfolgend Glycidylmethacrylat sowie anschließender Umwandlung der Oxiranylgruppen in β-Hydroxysulfonatgruppen erhältlich sind. Macromolecules 1993, 26, 7339-7352 offenbart z.B. die Herstellung von Polystyrol-Polyacrylsäure-Di-Blockpolymeren durch Hydrolyse von Polystyrol-Poly(tert.-Butylacrylat)Di-Blockpolymeren.

Generell kann eine Verknüpfung von getrennt vorgefertigten polymeren Blöcken dann erfolgen, wenn diese geeignete funktionelle Endgruppen aufweisen. So beschreibt die EP-A 665 240 z.B. Polymethacrylat-Polymethacrylsäure-Di-Blockpolymere, in denen die beiden Blöcke durch eine konstitutionelle Einheit 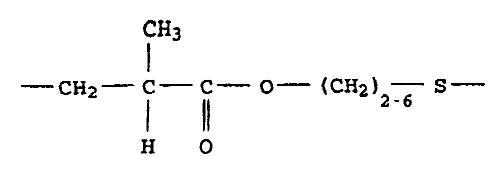 verknüpft sind.

Läßt man verschiedene Blöcke gegebenenfalls miteinander verknüpfende konstitutionelle Einheiten sowie Initiator-, gegebenenfalls Moderator-, und Abbruchreste unberücksichtigt, lassen sich Blockpolymere in einfacher Weise dadurch symbolisieren, daß man die Grundeinheit des jeweiligen Blocks in eckige Klammern setzt und mit einer außerhalb der eckigen Klammer angehängten Zahl anzeigt, wie oft die Grundeinheit im jeweiligen Block mit sich selbst verknüpft enthalten ist. Durch die Abfolge der eckigen Klammern kann die zeitliche Abfolge der Blockherstellung wiedergegeben werden.

Es ist allgemein bekannt, daß in Wasser gelöste amphiphile Blockpolymere bei geeigneter Länge der enthaltenen hydrophoben und hydrophilen Blöcke wie klassische Tenside zu wirken vermögen, weshalb sie auch als polymere Tenside bezeichnet und u.a. als Dispergiermittel zur Stabilisierung wäßriger Polymerisatdispersionen empfohlen werden.

Die EP-A 665 240 empfiehlt beispielsweise Di-Blockpolymere

[Alkylmethacrylat]ᵣ [Methacrylsäure]ₛ

mit r, s = eine Zahl von 4 bis 20 als Dispergiermittel in wäßrigen Polymerisatdispersionen. Diese Empfehlung wiederholt die Anmelderin der EP-A 665 240 in ihrem Firmenprospekt 17-1784-92/5D. Eine vergleichbare Empfehlung gibt Proc. Int. Org. Coat. Sci. Technol. 20th (1994), 511-518.

Polymer Preprints (Am. Chem. Soc. Div. Polym. Chem.) 29 (1988), 425-426 empfiehlt Di-Blockpolymere

[Alkylmethacrylat/α-Methylstyrol]ₚ [sulfoniertes Glycidylmethacrylat]_{q}

mit p eine Zahl < 20 als Dispergiermittel in wäßrigen Polymerisatdispersionen.

Macromolecules 1991, 24, 5922-5925 weist aus, daß bei Zusatz einer wäßrigen Lösung vorgenannter Di-Blockpolymere zu einer wäßrigen Standardpolymerisatdispersion (in ein Polymerisationsgefäß wird ein Gemisch aus 20 g Ethylacrylat, 80 g Wasser, 100 mg K₂S₂O₈ und 0,02 g Sodium oleyl tauride sulfonate unter Rühren (150 Umdrehungen pro Minute) vorgelegt und mittels eines Stickstoffstroms von Sauerstoff befreit; anschließend wird auf 80°C erwärmt und das Gemisch unter Aufrechterhaltung dieser Temperatur und Beibehalt des Rührens 30 min. polymerisiert; der resultierende mittlere Polymerisatteilchendurchmesser beträgt 80 nm (Photonenkorrelationsspektroskopie)) das Di-Blockpolymere rasch auf die Oberfläche der dispergierten Polymerisatteilchen aufzieht (Zunahme des mittels Photonenkorrelationsspektroskopie bestimmten hydrodynamischen Radius der dispergierten Polymerisatteilchen) und eine Nachstabilisierung der dispersen Verteilung ermöglicht.

Erfindungsgemäß ist aber gerade der Zusatz solcher amphiphiler Substanzen bevorzugt, bei deren Zusatz als 10⁻³ molare micellare wäßrige Lösung zu vorgenannter wäßriger Standardpolymerisatdispersion (in einer Gesamtmenge von 3 Gew.-% an amphiphiler Substanz, bezogen auf dispergiertes Polymerisat) bei 20°C und 1 atm unter mäßigem Rühren (5 Umdrehungen pro Minute) innerhalb von 15 min., bevorzugt innerhalb von 30 min., besonders bevorzugt innerhalb von 1 h, ganz besonders bevorzugt innerhalb von 5 h, noch besser innerhalb von 10 h und am besten innerhalb von 20 h, keine Zunahme des hydrodynamischen Radius der dispergierten Standpolymerisatteilchen bewirkt wird. D.h., erfindungsgemäß ist die dispergierende Wirkung der zuzusetzenden amphiphilen Substanz lediglich von untergeordneter Bedeutung.

Günstige erfindungsgemäß zuzusetzende Substanzen sind demnach solche, in deren micellaren wäßrigen Lösungen im Konzentrationsbereich von 10⁻⁴ mol/l bis 10⁻³ mol/l (soweit zugänglich) bei 20°C und 1 atm die durchschnittliche Verweilzeit eines Unimeren innerhalb einer Micelle wenigstens 15 min., bevorzugt wenigstens 30 min., besonders bevorzugt wenigstens 1 h, ganz besonders bevorzugt wenigstens 5 h, besser wenigstens 10 h und am besten wenigstens 20 h beträgt (radikalisch wäßrige Emulsionspolymerisationen werden in der Regel im Temperaturbereich von 0°C bis 100°C durchgeführt; selbstverständlich beeinflußt die Temperatur die Kinetik micellarer Systeme; der Temperatureinfluß ist bei vorgenannten Systemen jedoch nicht so ausgeprägt, daß eine erfindungsgemäße Normierung auf 20°C nicht mehr gerechtfertigt wäre).

Die mittlere verweilzeit eines Unimeren in einer Micelle läßt sich in an sich bekannter Weise z.B. dadurch ermitteln, daß man eine amphiphile Unimerensorte auf zwei verschiedene Weisen markiert, aus den unterschiedlich markierten Unimeren zwei getrennte wäßrige micellare Lösungen herstellt, die in entsprechend unterschiedlicher Weise markierte Micellen enthalten, diese Lösungen miteinander mischt und anschließend die zeitabhängige Einstellung einer wäßrigen micellaren Lösung von eine gemischte Markierung aufweisenden Micellen beobachtet.

Eine einfache Möglichkeit der Markierung besteht darin, die hydrophobe Gruppierung mit zwei voneinander verschiedenen Fluorophoren kovalent zu markieren, wobei die beiden Fluorophore so gewählt werden, daß bei ihrer Annäherung auf einen Abstand ≤ 10 nm das Fluoreszenzabklingen des einen (Donors) durch strahlungslosen Energietransfer (Förster-Transfer) zum anderen (Akzeptor) verkürzt wird.

Erzeugt man nun eine micellare Lösung, deren Unimere in vorgenannter Weise ausschließlich Donor-markiert sind, und eine wäßrige micellare Lösung, deren Unimere in vorgenannter Weise ausschließlich Akzeptor-markiert sind und mischt anschließend beide Lösungen, so ergeben sich durch Unimerenaustausch Micellen, die sowohl Donor- als auch Akzeptor-markierte Unimere enthalten und zwar in einem ≤ 10 nm betragenden Abstand, da die hydrophoben Gruppierungen in das Innere der Micellen weisen. Die zeitliche Veränderung des Fluoreszenzabklingens des Donor-Fluorophors als Funktion dieses Austausches liefert in an sich bekannter Weise die mittlere Verweilzeit.

Der Endwert des zeitlichen Fluoreszenzabklingens läßt sich dabei dadurch ermitteln, daß man ein Gemisch aus Donor- und Akzeptormarkierten Unimeren zunächst in einem organischen Lösungsmittel löst, das Lösungsmittel z.B. destillativ abtrennt und aus dem resultierenden Pulver die erforderliche wäßrige micellare Lösung erzeugt, deren Micellen dann von Anfang an sowohl Donor- als auch Akzeptor-markierte Unimere enthalten (vgl. Förster, Zeitschrift für Naturforschung, Bd. A4 (1949), 321; The synthesis of polymers bearing terminal fluorescent and fluorescence-quenching groups in Macromol. Chem., 191 (1990), 3069; Langmuir 1993, 1741-1748; Macromol. Chem. Macromol. Symp. 58 (1992), 195-199; Collect. Czech. Chem. Commun. (Vol. 58), (1993), 2362; Macromolecules 1992, 25, 461-469).

Eine andere Markierungsmöglichkeit bietet die isotopische Markierung, woraus unterschiedliche Massen aufweisende Unimere bzw. Micellen resultieren. Als Meßgrößen können dann z.B. solche herangezogen werden, die von der Masse abhängig sind. Als solche . eignet sich für die micellaren wäßrigen Lösungen der erfindungsgemäß zuzusetzenden amphiphilen Substanzen insbesonders die Wanderungsgeschwindigkeit im Zentifugalfeld der analytischen Ultrazentrifuge (AUZ.) Enthält die micellare wäßrige Lösung neben Unimeren z.B. zwei micellare Typen unterschiedlicher Masse, so weistder AUZ-Sedimentationslauf (vgl. z.B. W. Mächtle in S.E. Harding et al (Ed.) "Analytical Ultracentrifugation in Biochemistry and Polymer Science", Royal Society of Chemistry, Cambridge, England (1992), Kap. 10, 147; Langmuir 1993, 9, 1741-1748 und Macromol. Chem. Macromol. Symp. 58, 195-199, (1992)) den beiden micellaren Typen entsprechend zwei Schlieren-Peaks auf, wobei die Fläche unter dem jeweiligen Peak der jeweiligen Absolutmenge proportional ist. Verschmelzen nun als Funktion der Zeit die beiden micellaren Typen unterschiedlicher Masse zu einem micellaren Typ mittlerer Masse, so verschwinden als Funktion der Zeit die beiden vorgenannten Schlieren-Peaks und ein dritter Schlieren-Peak erwächst. Die Zeitcharakteristik liefert in an sich bekannter Weise die gewünschte mittlere Verweilzeit.

Desweiteren vermag der AUZ-Sedimentationslauf den in den micellaren wäßrigen Lösungen der erfindungsgemäß zuzusetzenden amphiphilen Substanzen enthaltenen unimer gelösten Anteil auszuweisen.

Erfindungsgemäß ist der Zusatz solcher amphiphiler Substanzen bevorzugt, in deren micellaren wäßrigen Lösungen im Konzentrationsbereich von 10⁻⁴ mol/l bis 10⁻³ mol/l (soweit zugänglich) bei 20°C und 1 atm der unimer gelöste Anteil, bezogen auf die insgesamt gelöst enthaltene Menge an amphiphiler Substanz, ≤ 5 Gew.-%, vorzugsgweise ≤ 3 Gew.-% und besonders bevorzugt ≤ 1 Gew.-% bzw. ≤ 0,5 Gew.-% beträgt.

Ferner ermöglicht das AUZ-Sedimentationsdiffusionsgleichgewichtsverfahren (vgl. W. Mächtle in Makromol. Chem., Rapid Commun. 13,555-563 (1992)) die Bestimmung des gewichtsmittleren Molekulargewichtes der unter einem Schlierenpeak enthaltenen micellaren Aggregate.

Ausgehend von den im Stand der Technik als Dispergiermittel für wäßrige Polymerisatdispersionen empfohlenen amphiphilen Blockpolymeren sind nun erfindungsgemäß zuzusetzende amphiphile Substanzen dadurch erhältlich, daß man die in den hydrophoben Blökken enthaltene Anzahl an Grundeinheiten (die Länge bzw. die Ausdehnung des hydrophoben Blocks) erhöht und gleichzeitig die Länge der hydrophilen Blöcke so bemißt, daß sie die Lösung des micellaren Aggregats ermöglichen.

Der damit einhergehende Verlust der Tensidwirkung ist erfindungsgemäß im wesentlichen unbeachtlich, da das erfindungsgemäße Ziel das eines Einsatzes als quasi wäßrige Saat-Polymerisatdispersion ist.

Der dominante Einfluß der Ausdehnung des hydrophoben Blocks weist sich z.B. anhand der c.m.c. wäßriger Lösungen von Di-Blockpolymeren der allgeinen Formel

[Styrol]ₘ [Na-Salz der Acrylsäure]ₙ

aus. Wählt man n als 1000 und erhöht gleichzeitig m von 6 auf 110, so sinkt die c.m.c. in wäßriger Lösung bei 20°C und 1 atm etwa um den Faktor 300.

Wählt man hingegen m als 110 und variiert n im Bereich von 300 bis 1400, so ändert sich die c.m.c. in wäßriger Lösung bei 20°C und 1 atm noch nicht einmal um den Faktor 2. Auffällig ist, daß für einen konstanten Wert n=1000 die c.m.c. bei Änderung der Variablen m von 6 bis 30 besonders drastisch abnimmt, während bei m ≥ 40 die c.m.c. mit wachsendem m kaum noch abnimmt. Dieser Befund ist insofern von Interesse, als sich nach eigenen Untersuchungen mit m ≥ 30 der Übergang zu micellaren wäßrigen Lösungen gefrorener Micellen vollzieht.

Im wesentlichen analoge Ergebnisse werden erhalten für Di-bzw. Tri-Blockpolymere

[Styrol]ₘ' [Methacrylsäure]ₙ',

[Styrol]ₘ'' [Ethylenglykol]ₙ'',

[Methylmethacrylat]ₘ''' [Na-Salz der Acrylsäure]ₙ''',

[Methylmethacrylat]ₘ'''' [Ethylenglykol]ₙ'''',

[Methacrylsäure]ₙ''''' [Styrol]ₘ''''' [Methacrylsäure]ₙ'''''

und

[Styrol]ₘ* [Acrylsäure]ₙ*.

Zur Gruppe der erfindungsgemäß zuzusetzenden amphiphilen Substanzen werden daher insbesondere Di- und Tri-Blockpolymere der allgemeinen Formeln I, I', II

[A]ₐ [B]_{b} (I),

[B]_{b} [A]ₐ (I'),

und

[A]_{a'} [B]_{b} [A]_{a'} bzw. [A]_{a'} [B]_{b} [A']_{a''} (II),

gerechnet, mit
- B=: eine Grundeinheit aus der Gruppe umfassend Styrol, Methylstyrol, Chlorstyrol, Vinylester von C₁-C₈-Alkan-10 carbonsäuren, Ester aus einer 3 bis 6 C-Atome aufweisenden α,β-monoethylenisch ungesättigten Carbonsäure und einem C₁-bis C₈-Alkanol, Butadien und Ethylen und
- A(A')=: eine Grundeinheit aus der Gruppe umfassend 3 bis L5 6 C-Atome aufweisende α,β-monoethylenisch ungesättigte Mono- und Dicarbonsäuren, 2-Acrylamido-2-methylpropansulfonsäure, Styrolsulfonsäure, Vinylsulfonsäure sowie die Alkalimetall (insbesondere Na und K) - und Ammoniumsalze der vorgenannten Säuren, N-Vinylpyrrolidon, Vinylalkohol, Ethylenglykol und Propylenglykol.

Selbstverständlich können sowohl der A(A')- als auch der B-Block auch Copolymere entsprechenden Polymerisationsgrades aus den Monomeren der jeweiligen Gruppe sein (diese Aussage bezieht sich auch auf die nachfolgend als bevorzugt hervorgehobenen Gruppen).

Vorzugsweise ist B eine Grundeinheit aus der Gruppe umfassend Styrol, Methylstyrol, Chlorstyrol, Vinylacetat, Vinylpropionat, Methylacrylat, Ethylacrylat, n-Butylacrylat, 2-Ethylhexylacrylat und Methylmethacrylat.

Besonders bevorzugt ist B eine Grundeinheit aus der Gruppe umfassend Styrol, Methylmethacrylat, n-Butylacrylat und 2-Ethylhexylacrylat. Ganz besonders bevorzugt ist der B-Block aus Styrol und/oder Methylmethacrylat aufgebaut.

A(A') ist vorzugsweise eine Grundeinheit aus der Gruppe umfassend Acrylsäure, Methacrylsäure, Vinylsulfonsäure, 2-Acrylamido-2-Methylpropansulfonsäure sowie die Na-, K- und NH₄-Salze dieser Säuren.

Besonders bevorzugt ist der A(A')-Block aus Acrylsäure, Methacrylsäure und/oder deren K-, Na-, NH₄-Salzen aufgebaut.

b ist eine ganze Zahl ≥ 30, vorzugsweise ≥ 35, besonders bevorzugt ≥ 40 und ganz besonders bevorzugt ≥ 45 bzw. ≥ 50 (bei bezüglich des Molekulargewichtes uneinheitlichen Blockpolymeren beziehen sich die hier gegebenen Aussagen auf diezahlenmittleren Werte der Koeffizienten b, a, a' und a''). Günstige Di-, Tri-Blockpolymere der allgemeinen Formeln I, II sind auch solche mit b ≥ 75 oder b ≥ 100. Normalerweise wird b ≤ 1000 bzw. ≤ 800, meist ≤ 600 und häufig ≤ 400 betragen. Von besonderem Interesse ist auch der Bereich b ≥ 30 bis 40, da seine Anwendungen die Herstellung feinteiliger wäßriger Polymerisatdispersionen ermöglicht. Dies trifft insbesondere dann zu, wenn sich die Grundeinheiten für die Blöcke A(A') und B aus den besonders bevorzugten Gruppen rekrutieren. Mit Vorteil wird der Block B hinsichtlich seiner Monomerenzusammensetzung und seiner Länge so gewählt, daß er als unabhängiges Polymer eine Glasübergangstemperatur Tg ≥ 20, bevorzugt ≥ 40, besonders bevorzugt ≥ 60, ganz besonders bevorzugt ≥ 80 und noch besser ≥ 100°C aufweist. Tg meint dabei die quasi-statische Glasübergangstemperatur gemessen mittels DSC (differential scanning Calorimetry, 20°C/min., midpoint) nach DIN 53765. Die oberen Grenzwerte für Tg im Fall von hohen Molekulargewichten und homopolymeren Blöcken B weist z.B. Tab. 8 in Ullmann's Encyclopedia of Industrial Chemistry, VCH, Weinheim (1992), Vol. A21, S.169 aus. Hinsichtlich der zur Solubilisierung der Blöcke B erforderlichen Länge der Blöcke A sowie hinsichtlich der Frage, in wieweit eine wäßrige micellare Lösung auf dem Weg der direkten Lösung in Wasser oder nur auf dem Weg der indirekten Lösung erhältlich ist, läßt sich keine allgemeingültige Aussage machen, doch kann die Antwort im Einzelfall anhand weniger Vorversuche ermittelt werden. Eine erfindungsgemäß erforderliche micellare Solubilisierung ist in wäßriger Lösung im Fall der Di-Blockpolymere I dann möglich, wenn a wenigstens 40 % bzw. wenigstens 50 % von b beträgt. In der Regel beträgt a wenigstens 75 % von b und häufig gilt a ≥ b. a-Werte von bis 2500 und mehr sind möglich.

Im Fall von Tri-Blockpolymeren II ist die erfindungsgemäß erforderliche micellare Solubilisierung in wäßriger Lösung dann möglich, wenn a' und a'' unabhängig voneinander wenigstens 20 % bzw. wenigstens 25 % von b betragen. In der Regel betragen sie wenigstens 40 % von b und häufig gilt a', a'' ≥ b/2 bzw. ≥ b. a'-, a''-Werte von bis 2000 und mehr sind möglich.

Wird das Verhältnis a/b bzw. (a' + a")/b jedoch zu groß, wandelt sich die micellare wäßrige Lösung in der Regel in eine molekulare wäßrige Lösung.

Eine direkte micellare wäßrige Lösung der Di- und Tri-Blockpolymer der allgemeinen Formeln I, II ist häufig dann möglich, wenn die Grundeinheit A das Salz einer monethylenisch ungesättigten organische Säure ist. Handelt es sich bei der Grundeinheit A hingegen um die freie Säure, muß in der Regel der Weg des indirekten Lösens (zunächst lösen in einem Gemisch aus Wasser und einem organischen Lösungsmittel, wobei letztes mit Vorteil so gewählt wird, daß der Block B in diesem Lösungsmittel als unabhängiges Polymeres löslich wäre; dann sukzessives Verdrängen des organischen Lösungmittels via Dialyse und/oder Wasserzusatz im Verein mit destillativer Lösungsmittelabtrennung) angewendet werden. Häufig gelingt auch das direkte micellare Lösen der freien Säure in alkalischem Wasser.

Generell bevorzugt werden als erfindunsgemäß zu verwendende amphiphile Substanzen solche Di- und Tri-Blockpolymere der allgemeinen Formeln I, II, deren hydrophile Blöcke A polyelektrolytischer Natur sind (d.h. nicht nichtionisch, sondern in wäßrigem Medium in ein Polyion und Gegenionen dissoziierend).

Bemerkenswerterweise solubilisieren die micellaren wäßrigen Lösungen der erfindungsgemäß zuzusetzenden amphiphilen Substanzen nach der Methode der radikalischen wäßrigen Emulsionspolymerisation zu polymerisierende, wenigstens einer Vinylgruppe aufweisende, Monomere selektiver als die micellaren wäßrigen Lösungen der klassischen Tenside. D.h., bei ihrer Verwendung zur kontrollierten Durchführung radikalischer wäßriger Emulsionspolymerisationen ist es empfehlenswert, den hydrophoben micellaren Kern und die zu polymerisierenden Monomeren aufeinander abzustimmen, d.h. einander chemisch ähnlich zu wählen. Dementsprechend sind das Element Fluor enthaltende hydrophobe Blöcke B erfindungsgemäß weniger bevorzugt.

Nachfolgend seien einige individuelle Beispiele von als erfindungsgemäß zuzusetzende amphiphile Substanzen geeigneten Blockpolymeren I, II aufgeführt. Ein in Klammern nachgestelltes d weist aus, daß zum Erhalt der wenigstens 10⁻⁴ molaren micellaren wäßrigen Lösung der Weg des direkten Lösens eingeschlagen worden ist, während ein in entsprechender Weise nachgestelltes i die indirekte Solubilisierung (in der Regel ausgehend von Dioxan/Wasser Gemischen) ausweist:

[Styrol]₂₆₀ [Methacrylsäure]₃₈₅ (i)

[Styrol]₃₈₁ [Methacrylsäure]₃₂₀ (i)

[Styrol]₂₃₃ [Methacrylsäure]₂₄₀ (i)

[Styrol]₃₃₃ [Methacrylsäure] ₂₆₈ (i)

[Styrol]₃₁₇ [Methacrylsäure]₂₅₆ (i)

[Styrol]₂₁₁ [Methacrylsäure]₂₀₉ (i)

[Styrol]₂₃₀ [Methacrylsäure]₂₄₄ (i)

[Styrol]₂₀₂ [Methacrylsäure]₃₁₄ (i)

[Styrol]₃₂₇ [Methacrylsäure]₂₆₇ (i)

[Styrol]₃₄₆ [Methacrylsäure]₄₄₂ (i)

[Methacrylsäure]₅₂ [Styrol]₇₃ [Methacrylsäure]₅₂ (i)

[Methacrylsäure]₉₃ [Styrol]₂₁₂ [Methacrylsäure]₉₃ (i)

[Methacrylsäure]₁₃₂ [Styrol]₃₀₁ [Methacrylsäure]₁₃₂ (i)

[Methacrylsäure]₁₇₄ [Styrol]₅₂₉ [Methacrylsäure]₁₇₄ (i)

[Methacrylsäure]₁₃₂ [Styrol]₆₀₄ [Methacrylsäure]₁₃₂ (i)

[Styrol]₄₀ [Natriumacrylat]₈₂ (d)

[Styrol]₄₀ [Natriumacrylat]₁₈₀ (d)

[Styrol]₄₀ [Natriumacrylat]₅₂₀ (d)

[Styrol]₄₀ [Natriumacrylat]₂₄₀₀ (d)

[Styrol]₈₆ [Natriumacrylat]₁₀₀ (d)

[Styrol]₈₆ [Natriumacrylat]₁₉₀ (d)

[Styrol]₈₆ [Natriumacrylat]₃₉₀ (d)

[Styrol]₈₆ [Natriumacrylat]₉₀₀ (d)

[Styrol]₁₁₀ [Natriumacrylat]₃₈₀ (d)

[Styrol]₁₁₀ [Natriumacrylat]₂₄₀₀ (d)

[Methylmethacrylat]₃₉ [Natriumacrylat]₇₉ (d)

[Methylmethacrylat]₈₂ [Natriumacrylat]₈₂ (d)

[Methylmethacrylat]₈₀ [Natriumacrylat]₈₀ (d)

[Methylmethacrylat]₇₉ [Natriumacrylat]₈₆ (d)

[Methylmethacrylat]₃₅ [Natriumacrylat]₁₀₅ (d)

[Methylmethacrylat]₃₆ [Natriumacrylat]₃₃ (d)

[Methylmethacrylat]₃₉ [Natriumacrylat]₃₉ (d)

[Methylmethacrylat]₃₁ [Natriumacrylat]₁₁₀ (d)

[Methylmethacrylat]₄₀ [Natriumacrylat]₈₀ (d)

[Methylmethacrylat]₄₉ [Natriumacrylat]₈₈ (d)

[Methylmethacrylat]₇₀ [Natriumacrylat]₇₅ (d)

[Methylmethacrylat]₆₂₀ [Natriumacrylat] 620 (i, Tetrahydrofuran).

Wie bereits erwähnt sind die als erfindungsgemäß zuzusetzende amphiphile Substanzen geeigneten Blockpolymere I, II z.B. auf dem Weg der anionisch initiierten sequentiellen Polymerisation ("living polymers") erhältlich. Anstelle der ungestättigten orga-nischen Säuren wie Acrylsäure und Methacrylsäure werden dabei häufig zunächst deren tert.-Butylester copolymerisiert und nachfolgend durch Hydrolyse in die Säureform gewandelt. In ähnlicher Weise werden teilweise auch die Säureanhydride anstelle der Säuren copolymerisiert und nachfolgend hydrolysiert.

Vorzugsweise erfolgt die Herstellung der Blockpolymeren I, II jedoch auf dem Weg der radikalisch initiierten sequentiellen Polymerisation, d.h. über pseudo-lebende radikalische Polymere, wie es in den US-A 4 581 429, US-A 5 322 912 und US-A 5 412 047 beschrieben ist. Der Schlüssel der in diesen Schriften offenbarten Verfahrensweise besteht darin, die radikalisch initiierte Polymerisation in Gegenwart von stabilen Radikalen, z.B. N-Oxyl-Radikalen, durchzuführen, was zu Polymeren führt, die zu radikalischen Polymeren reaktivierbar sind und so nach Zugabe weiterer Monomeren weiterwachsen können.

Beispielhaft genannt seien als solche geeignete N-Oxyl-Radikale: 2,2,6,6-Tetramethyl-1-pyrrolidinyloxy (TEMPO), 4-Oxo-2,2,6,6-tetramethyl-1-piperidinyloxy (4-Oxo-TEMPO), 4-Hydroxy-2,2,6,6-tetramethyl-1-piperidinyloxy, 2,2,5,5-tetramethyl-1-pyrrolidinyloxy, 3-Carboxy-2,2,5,5-tetramethyl-pyrrolidinyloxy und Di-tert.-butylnitroxid.

2,6-Diphenyl-2,6-dimethyl-1-piperidinyloxy sowie 2,5-Dephenyl-2,5-dimethyl-1-pyrrolidinyloxy können ebenfalls eingesetzt werden. Selbstverständlich können auch Mischungen der vorgenannten Verbindungen eingesetzt werden.

Die sequentielle radikalische Polymerisation wird dabei in der Regel bei erhöhter Temperatur, vorteilhaft bei 100 bis 180°C, vorzugsweise 110 bis 175°C, insbesondere 130 bis 160°C durchgeführt. Sie kann sowohl in Substanz als auch in Lösung (oder auch nach der Methode der radikalischen wäßrigen Emulsionspolymerisation) durchgeführt werden. Die Auslösung der radikalischen Polymerisation wird dabei zweckmäßig durch konventionelle radikalische Starter mit geringer Halbwertszeit durchgeführt, was den Erhalt von besonders geringen Uneinheitlichkeiten U (= Verhältnis von gewichtsmittlerem zu zahlenmittlerem Molekulargewicht = M_{w}/Mₙ) ermöglicht. Als solche koventionellen radikalischen Starter kommen u.a. in Betracht 2,4-Dimethyl-2,5-dibenzyl-peroxyhexan, tert.-Butyl-peroxybenzoat, Di-tert.-butyl-diperoxyphthalat, Methylethylketonperoxid, Dicumylperoxid, tert.-Butyl-peroxycrotonat, 2,2-Bis-tert.-butyl(peroxybutan), tert.-Butylperoxy-isopropylcarbonat, 2,5-Dimethyl-2,5-bis(benzoylperoxy)hexan, tert.-Butylperacetat, Di-tert.-butyl-diperoxyphthalat, 2,4 -Pentadienpe-roxid, Di-tert.-butylperoxid, 2,5-Dimethyl-2,5-di(tert.-butylperoxy)hexin, 2,5-Dimethyl-2,5-di(tert.-butylperoxy)hexan, vorzugweise tert.-Butylperoxy-2-ethylhexanoat, tert.-Butylperoxypivalat, tert.-Amyl-peroxy-2-ethylhexanoat, Azobisalkylnitrile wie Azobisisobutylronitril und Diarylperoxide wie Dibenzoyl-peroxid sowie Mischungen der vorgenannten Verbindungen. Besondere geeignete mitzuverwendende konventionelle radikalische Initiatoren sind solche mit einer Halbwertszeit von ca. 1 h bei Temperaturen von 60 bis 90°C. Das molare Verhältnis von N-Oxyl-Radikal:konventionellem radikalischem Initiator sollte 0,5 bis 5, vorzugsweise 0,8 bis 4 betragen. Auf diese Weise sind für U regelmäßig Werte von 1 bis 3 oder von 1 bis 2, meist 1 bis 1,5 häufig 1 bis 1,2 und oft 1 bis 1,1 erreichbar. Blockpolymere mit U-Werten in den vorgenannten Bereichen sind erfindungsgemäß generell geeignet.

Anstatt bereits von stabilen N-Oxyl-Radikalen auszugehen, kann auch von Verbindungen ausgegangen werden (z.B. die Alkoxyamine der US-A 4 581 429), die z.B. unter Einwirkung von Wärme unter Ausbildung eines stabilen N-Oxyl-Radikals und eines die Polymerisation initiierenden radikalischen Partners zerfallen. Auch können solche N-Oxyl-Radikale aus geeigneten eine NO-Funktion aufweisenden Verbindungen in situ erzeugt werden (vgl. Spalte 5, Zeilen 60 ff der US-A 4 581 429).

Blockpolymere mit möglichst einheitlichem Molekulargewicht sind erfindungsgemäß insofern günstig, als in ihren micellaren wäßrigen Lösungen die Micellen in der Regel eine im wesentlichen einheitliche Größe aufweisen, was bei ihrer Verwendung zur kontrollierten radikalischen wäßrigen Emulsionspolymerisation die Herstellung von im wesentlichen monodispersen (bezüglich der Durchmesser der dispergierten Polymerisatteilchen) wäßrigen Polymerisatdispersionen erleichtert.

Micellare wäßrige Lösungen der erfindungsgemäß zuzusetzenden amphiphilen Substanzen mit breiter Micellgrößenverteilung können sowohl als solche zur kontrollierten radikalischen wäßrigen Emulsionspolymerisation eingesetzt (in der Regel resultieren dann wäßrige Polymerisatdispersionen mit breiterer Polymerisatteilchendurchmesserverteilung) als auch (infolge ihrer langen Lebensdauern) zuvor in der analytischen Ultrazentrifuge nach ihrer Größe fraktioniert und erst als solchermaßen monodisperse Portionen ihrer erfindungsgemäßen Verwendung zugeführt werden.

Eine andere Möglichkeit der Fraktionierung bietet die Fluß-Feld-Fluß-Fraktionierung, die nach dem micellaren hydrodynamischen Durchmesser sortiert. Eine Darstellung dieser Fraktionierungsmethode findet sich z.B. in Anal. Chem. 1992, 64, 790-798. Ein Maß für die Güte der Fraktionierung ist das Verhältnis von M_{w}/Mₙ. Das micellare gewichtsmittlere Molekulargewicht liefert z.B. die klassische Lichtstreuung, das micellare zahlenmittlere Molekulargewicht ist z.B. membranosmometrisch erhältlich.

Die durch sequentielle radikalische Polymerisation gemäß den US-A 4 581 429, US-A 5 322 912 und US-A 5 412 047 erhältlichen Blockpolymere weisen in der Regel eine endständige Oxyamingruppe auf. Aus verschiedenen Gründen kann eine Beseitigung der Oxyamingruppen erwünscht sein. In Spalte 6, Zeilen 54 ff bietet die US-A 4 581 429 verschiedene solche Beseitigungsmöglichkeiten an. Erfindungsgemäß von besonderem Interesse sind diejenigen, die zu einem -H, einer Hydroxylgruppe oder zu einer ethylenisch ungesättigten endständigen Gruppe führen. Auf letztere Weise sind ethylenisch ungesättigte Blockpolymere erhältlich (Makromere), die erfindungsgemäß insofern von Interesse sind, als sie im Verlauf der radikalischen wäßrigen Emulsionspolymerisation an die dispergierten Polymerisatteilchen chemisch gebunden werden. Ganz generell erfolgt die Herstellung von erfindungsgemäß zu verwendenden Blockpolymeren durch initiierte Polymerisation vorzugsweise so, daß ein gegebenenfalls hydrophober Initiator- oder Moderatorrest den hydrophilen Block endständig terminiert. Selbstredend kann auch der hydrophobe Block so terminiert werden.

Die Durchführung des erfindungsgemäßen Verfahrens zur Herstellung einer wäßrigen Polymerisatdispersion durch Polymerisation von wenigstens eine Vinylgruppe aufweisenden Monomeren nach der Methode der radikalischen wäßrigen Emulsionspolymerisation kann in einfacher Weise so erfolgen, daß man in einem Polymerisationsgefäß eine micellare wäßrige Lösung der erfindungsgemäß zuzusetzenden amphiphilen Substanz, gegebenenfalls weiteres wäßriges Dispergiermedium, die zu polymerisierenden Monomeren und den radikalischen Polymerisationsinitiator miteinander vermischt, das Gemisch unter Rühren auf die Polymerisationstemperatur erwärmt und unter Rühren die Polymerisation bis zum gewünschten Polymerisationsumsatz aufrechterhält.

Der Beschaffenheit des Dispergiermediums und dem verwendeten Initiatorsystem angepaßt bewegt sich die Polymerisationstemperatur normalerweise zwischen 20 und 100°C. Oft beträgt sie 50 bis 95°C und häufig liegt sie bei 70 bis 90°C.

Üblicherweise erfolgt die radikalische wäßrige Emulsionspolymerisation bei Normaldruck ( 1 atm). Sie kann jedoch, insbesondere bei Verwendung von bei Normaldruck gasförmigen Monomeren, auch unter erhöhtem Druck erfolgen. In entsprechender Weise sind auch Polymerisationstemperaturen oberhalb von 100°C möglich (z.B. bis 130°C). Die ebenda genannten Bedingungen sind auch für die übrigen in dieser Schrift behandelten Verfahren der radikalischen wäßrigen Emulsionspolymerisation typisch. Bei der beschriebenen Emulsionspolymerisationsweise, bei der man die Gesamtmenge des Polymerisationsansatzes ins Polymerisationsgefäß vorlegt, wird die Größe der entstehenden Polymerisatteilchen im wesentlichen durch die Art und Menge der im Ansatz enthaltenen erfindungsgemäß zuzusetzenden amphiphilen Substanz bestimmt. Mit zunehmender Menge der im Ansatz enthaltenen amphiphilen Substanz werden kleinere Polymerisatteilchen erzielt und umgekehrt. Mit einer Verdopplung der im Polymerisationsansatz enthaltenen Menge der relevanten amphiphilen Substanz geht normalerweise eine Verdopplung der Anzahl gebildeter, in disperser Verteilung befindlicher, Polymerisatteilchen einher.

Nachteilig an der beschriebenen Emulsionspolymerisationsweise (Gesamtansatzvorlage) ist jedoch, daß sie sich nur zur Herstellung wäßriger Polymerisatdispersionen mit relativ geringem Polymerisatgehalt eignet.

Bei den in der Praxis relevanten Polymerisatgehalten (in der Regel > 25 Gew-%) bestehen bei der Polymerisationsweise unter Gesamtansatzvorlage z.B. Probleme hinsichtlich der technischen Beherrschbarkeit der Abführung der exothermen Wärmetönung der Polymerisationsreaktion.

Im technischen Maßstab wird die radikalische wäßrige Emulsionspolymerisation daher in der Regel nach dem Zulaufverfahren durchgeführt. D.h., die überwiegende Menge (in der Regel 50 bis 100 Gew.-%) der zu polymerisierenden Monomeren wird dem Polymerisationsgefäß gemäß des Fortschreitens der Polymerisation der bereits im Polymerisationsgefäß befindlichen Monomeren (Polymerisationsumsatz in der Regel ≥ 80, oder ≥ 90 oder ≥ 95 mol-%) zugesetzt. Zur kontrollierten Einstellung der Teilchengröße der resultierenden wäßrigen Polymerisatdispersion legt man beim Zulaufverfahren erfindungsgemäß üblicherweise eine micellare wäßrige Lösung der erfindungsgemäß zuzusetzenden amphiphilen Substanz ins Polymerisationsgefäß vor. Das Mengenverhältnis aus vorgelegten Micellen (und deren Art) und zu polymerisierenden Monomeren bestimmt im wesentlichen die Größe der Polymerisatteilchen in der resultierenden wäßrigen Polymerisatdispersion. Je kleiner die vorgelegten Micellen und je größer ihre Anzahl, desto kleiner sind die resultierenden Polymerisatteilchen bei gegebener Monomerenmenge. Vervielfacht man die vorgelegte Anzahl Micellen, vervielfacht sich bei der erfindungsgemäßen Verfahrensweise in der Regel die Anzahl an gebildeten Polymerisatteilchen in entspre-chender Weise. Vorzugsweise werden beim Zulaufverfahren maximal bis zu 20 Gew.-% der zu polymerisierenden Monomeren ins Polymerisationsgefäß mitvorgelegt. Nach Beginn der radikalischen wäßrigen Emulsionspolymerisation erfolgt der Zulauf der übrigen Monomeren innerhalb des erfingungsgemäßen Zulaufverfahrens so, daß zu jedem Zeitpunkt der Zufuhr der Polymerisationsumsatz der bereits zuvor dem Polymerisationsgefäß insgesamt zugeführten Monomeren wenigstens 80 mol-%, vorzugsweise wenigstens 90 mol-% beträgt.

Die Art und Weise, in der das radikalische Initiatorsystem im Verlauf der erfindungsgemäßen radikalischen wäßrigen Emulsionspolymerisation dem Polymerisationsgefäß beim Zulaufverfahren zugegeben wird, ist eher von untergeordneter Bedeutung. Das Initiatorsystem kann sowohl vollständig in das Polymerisationsgefäß vorgelegt, als auch nach Maßgabe seines Verbrauchs im Verlauf des erfindungsgemäßen Zulaufverfahrens kontinuierlich oder stufenweise zugesetzt werden. Im einzelnen hängt dies in dem Durchschnittsfachmann an sich bekannter Weise sowohl von der chemischen Natur des Initiatorsystems als auch von der Polymerisationstemperatur ab.

Wird im Rahmen des erfindungsgemäßen Zulaufverfahrens auch oder nur während der Monomerenzufuhr von der erfindungsgemäß zuzusetzenden amphiphilen Substanz ins Polymerisationsgefäß gegeben (d.h., umfaßt die Vorlage nicht dessen Gesamtmenge), so bewirkt dies in der Regel eine kontrollierte Verbreiterung der Größenverteilung der resultierenden Polymerisatteilchen. Vorzugsweise erfolgt die Zufuhr der erfindungsgemäß zuzusetzenden amphiphilen Substanz auch hier in Form einer vorgefertigten micellaren wäßrigen Lösung. Dabei können z.B. die Zulaufverfahren der DE-A 42 13 969, der DE-A 42 13 968, der DE-A 42 13 967, der DE-A 42 13 964 und der DE-A 42 13 965 in übertragener Weise angewendet werden, um entsprechend hochkonzentrierte wäßrige Polymerisatdispersionen herzustellen. Die in den vorgenannten Offenlegungsschriften zu verwendenden wäßrigen Ausgangsdispersionen sind dazu in einfacher Weise durch entsprechende erfindungsgemäße micellare wäßrige Lösungen zu ersetzen.

Als radikalische Polymerisationsinitiatoren kommen für das erfindungsgemäße Verfahren alle diejenigen in Betracht, die in der Lage sind, eine radikalische wäßrige Emulsionspolymerisation auszulösen. Es kann sich dabei sowohl um Peroxide, z.B. Alkalimetallperoxidisulfate, als auch um Azoverbindungen handeln. Für Polymerisationen bei tiefen Temperaturen werden vorzugsweise kombinierte Systeme, die aus wenigstens einem organischen Reduktionsmittel und wenigstens einem Peroxid und/oder Hydroperoxid zu-sammengesetzt sind, z.B. tert.-Butylhydroperoxid und das Natriummetallsalz der Hydroxymethansulfinsäure oder Wasserstoffperoxid und Ascorbinsäure (als elektrolytfreies Redoxinitiatorsystem), und ganz besonders bevorzugt kombinierte Systeme, die darüber hinaus eine geringe Menge einer im Polymerisationsmedium lös-lichen Metallverbindung, deren metallische Komponente in mehreren Wertigkeitsstufen auftreten kann, enthalten, z.B. Ascorbinsäure/Eisen(II)sulfat/Wasserstoffperoxid, eingesetzt, wobei anstelle von Ascorbinsäure auch häufig das Natriummetallsalz der Hydroxymethansulfinsäure, Natriumsulfit, Natriumhydrogensulfit oder Natriummetalldisulfit und anstelle von Wasserstoffperoxid tert. Butylhydroperoxid oder Alkalemetallperoxidsulfate und/oder Ammoniumperoxidisulfat angewendet werden. Anstelle eines wasserlöslichen Eisen(II)-Salzes wird häufig eine Kombination aus wasserlöslichen Fe/V-Salzen benutzt.

In der Regel beträgt die Menge der eingesetzten radikalischen Initiatorsysteme, bezogen auf die Gesamtmenge der zu polymerisierenden Monomeren, 0,1 bis 2 Gew.-%.

Bemerkenswerterweise erfordert das erfindungsgemäße Verfahren nicht notwendigerweise die Mitverwendung zusätzlicher Dispergiermittel um eine wäßrige Polymerisatdispersion befriedigender Stabilität zu erhalten. Solche an weiteren Dispergiermitteln freie nach dem erfindungsgemäßen Verfahren erhältliche wäßrige Polymerisatdispersionen sind insofern von Vorteil, als sie eine besonders geringe Neigung zum Schäumen und eine vergleichsweise hohe Oberflächenspannung aufweisen.

Selbstverständlich können im Rahmen des erfindungsgemäßen Verfahrens jedoch konventionelle Dispergiermittel zum Zwecke einer weitergehenden Stabilisierung der dispersen Verteilung der erzeugten Polymerisatteilchen mitverwendet werden. Zur Aufrechterhaltung der Kontrolle über das erfindungsgemäße Verfahren ist bei einer Mitverwendung zusätzlicher Dispergiermittel jedoch vorzugsweise darauf zu achten, daß die Mengen so bemessen werden, daß die c.m.c.'s dieser zusätzlichen Dispergiermittel nicht überschritten werden. Häufig empfiehlt es sich, nach Beendigung der erfindungsgemäßen radikalischen wäßrigen Emulsionspolymerisation durch Zusatz konventioneller Dispergiermittel nachzustabilisieren.

Beispiele für solche konventionelle Dispergiermittel sind die klassischen Tenside. Beispielhaft genannt seien Dowfax® 2A1 der Dow Chemical Company, ethoxylierte Mono-, Di- und Tri-Alkylphenole (EO-Grad: 3 bis 50, Alkylrest: C₄ bis C₉), ethoxylierte Fett-alkohole (EO-Grad: 3 bis 50, Alkylrest: C₈ bis C₃₆), sowie Alkaliund Ammoniumsalze von Alkylsulfaten (Alkylrest: C₈ bis C₁₂), von Schwefelsäurehalbestern ethoxylierter Alkohole (EO-Grad: 4 bis 30, Alkylrest: C₁₂ bis C₁₈) und ethoxylierter Alkylphenole (EO-Grad: 3 bis 50, Alkylrest: C₄ bis C₉), von Alkylsulfonsäuren (Alkylrest: C₁₂ bis C₁₈) und von Alkylarylsulfonsäuren (Alkylrest: C₉ bis C₁₈). Weitere geeignete Tenside finden sich in Houben-Weyl, Methoden der organischen Chemie, Band XIV/1, Makromolekulare Stoffe, Georg-Thieme Verlag, Stuttgart, 1961, Seiten 192 bis 208. Anstelle von oder im Gemisch mit klassischen Tensiden können aber auch konventionelle Schutzkolloide wie Polyvinylalkohol, Polyvinylpyrrolidon oder amphiphile Blockpolymere mit kurzen hydrophoben Blöcken zur Co-Stabilisierung eingesetzt werden. In der Regel wird die mitverwendete Menge an konventionellen Dispergiermitteln, bezogen auf die zu polymerisierenden Monomeren, 3, bzw. 2 Gew.-% nicht überschreiten.

Als radikalisch polymerisierbare Monomere kommen für das erfindungsgemäße Verfahren insbesondere in Betracht monoethylenisch ungesättigte Monomere wie Olefine, z.B. Ethylen, vinylaromatische Monomere wie Styrol, α-Methylstyrol, o-Chlorstyrol oder Vinyltoluole, Vinyl- und Vinylidenhalogenide wie Vinyl- und Vinylidenchlorid, Ester aus Vinylalkohol und 1 bis 18 C-Atome aufweisenden Monocarbonsäuren wie Vinylacetat, Vinylpropionat, Vinyl-nbutyrat, Vinyllaurat und Vinylstearat, Ester aus vorzugsweise 3 bis 6 C-Atome aufweisenden α,β-monoethylenisch ungesättigten Mono- und Dicarbonsäuren, wie insbesondere Acrylsäure, Methacrylsäure, Maleinsäure, Fumarsäure und Itaconsäure, mit im allgemeinen 1 bis 12, vorzugsweise 1 bis 8 und insbesondere 1 bis 4 C-Atome aufweisenden Alkanolen wie besonders Acrylsäure- und Methyacrylsäuremethyl-, -ethyl, -n-butyl, -iso-butyl und -2-ethylhexylester, Maleinsäuredimethylester oder Maleinsäure-n-butylester, Nitrile α,β-monoethylenisch ungesättigter Carbonsäuren wie Acrylnitril sowie C₄₋₈-konjugierte Diene wie 1,3-Butadien und Isopren in Betracht. Die genannten Monomeren bilden in der Regel die Hauptmonomeren, die, bezogen auf die Gesamtmenge der nach dem erfindungsgemäßen Verfahren der radikalischen wäßrigen Emulsionspolymerisation zu polymerisierenden Monomeren, normalerweise einen Anteil von mehr als 50 Gew.-% auf sich vereinen. Monomere, die für sich polymerisiert üblicherweise Homopolymerisate ergeben, die eine erhöhte Wasserlöslichkeit aufweisen, werden im Normalfall lediglich als modifizierende Monomere in Mengen, bezogen auf die Gesamtmenge der zu polymerisierenden Monomeren, von weniger als 50 Gew.-%, in der Regel 0,5 bis 20, vorzugsweise 1 bis 10 Gew.-%, miteinpolymerisiert.

Beispiele für derartige Monomere sind 3 bis 6 C-Atome aufweisende α,β-monoethylenisch ungesättigte Mono- und Dicarbonsäuren und deren Amide wie z.B. Acrylsäure, Methacrylsäure, Maleinsäure, Fumarsäure, Itaconsäure, Acrylamid und Methacrylamid, ferner Vinylsulfonsäure und deren wasserlösliche Salze sowie N-Vinylpyrrolidon. Monomere, die üblicherweise die innere Festigkeit der Verfilmungen der wäßrigen Polymerisatenddispersion erhöhen, werden in der Regel ebenfalls nur in untergeordneten Mengen, meist 0,5 bis 10 Gew.-% bezogen auf die Gesamtmenge der zu polymerisierenden Monomeren, miteinpolymerisiert. Normalerweise weisen derartige Monomere eine Epoxy-, Hydroxy-, N-Methylol-, Carbonyl-Gruppen oder wenigstens zwei nicht konjugierte ethylenisch ungesättigte Doppelbindungen auf. Beispiele hierfür sind N-Alkylolamide von 3 bis 10 C-Atome aufweisenden α,β-monoethylenisch ungesättigten Carbonsäuren sowie deren Ester mit 1 bis 4 C-Atome aufweisenden Alkoholen, unter denen das N-Methylolacrylamid und das N-Methylolmethacrylamid ganz besonders bevorzugt sind, silanisierte Monomere wie γ-Methacryloxypropylsilan oder Vinyltrimethoxysilan, zwei Vinylreste aufweisende Monomere, zwei Vinylidenreste aufweisende Monomere sowie zwei Alkenylreste aufweisende Monomere. Besonders geeignet sind dabei die Di-Ester zweiwertiger Alkohole mit α,β-monoethylenisch ungesättigten Monocarbonsäuren unter denen wiederum die Acryl- und Methacrylsäure vorzugsweise eingesetzt werden. Beispiele für derartige zwei nicht konjugierte ethylenisch ungesättigte Doppelbindungen aufweisende Monomere sind Alkylenglycoldiacrylate und -dimethacrylate wie Ethylenglycoldiacrylat, 1,3-Butylenglycoldiacrylat, 1,4-Butylenglycoldiacrylat sowie Propylenglycoldiacrylat, Divinylbenzol, Vinylmethacrylat, Vinylacrylat, Allylmethacrylat, Allylacrylat, Diallylmaleat, Diallylfumarat, Methylenbisacrylamid, Cyclopentadienylacrylat oder Triallylcyanurat. In diesem Zusammenhang von besonderer Bedeutung sind auch die Methacrylsäure- und Acrylsäure-C₁-C₈-Hydroxyalkylester wie Hydroxyethyl-, n-Hydroxypropyl- oder n-Hydroxybutylacrylat und -methacrylat sowie Verbindungen wie Diacetonacrylamid und Acetylacetoxyethylacrylat bzw. -methacrylat. Neben ungesättigte Doppelbindungen aufweisenden Monomeren können in untergeordneten Mengen, üblicherweise 0,01 bis 2 Gew.-% bezogen auf die zu polymerisierenden Monomeren, das Molekulargewicht regelnde Substanzen wie tert.-Dodecylmercaptan sowie 3-Mercaptopropyltrimethoxysilan miteinpolymerisiert werden. Vorzugsweise werden derartige Substanzen im Gemisch mit den zu polymerisierenden Monomeren der Polymerisationszone zugegeben. Insbesondere lassen sich nach dem erfindungsgemäßen Verfahren solche Monomerengemische in kontrollierter Weise nach der Methode der radikalischen wäßrigen Emulsionspolymerisation zu wäßrigen Polymerisatdispersionen polymerisieren, die
- zu 70 bis 100 Gew.-% aus Estern der Acryl- und/oder Methacrylsäure mit 1 bis 12 C-Atome aufweisenden Alkanolen und/oder Styrol
   oder
- zu 70 bis 100 Gew.-% aus Vinylchlorid und/oder Vinylidenchlorid
   oder
- zu 70 bis 100 Gew.-% aus Styrol und/oder Butadien
   oder
- zu 40 bis 100 Gew.-% aus Vinylacetat, Vinylpropionat und/oder Ethylen
zusammengesetztsind, wobei die Acrylatgemische insbesondere auch nachfolgende Monomerenzusammensetzungen umfassen, die bestehen aus:

| | |
|---|---|
| 70 bis 99 Gew.-% | wenigstens eines Esters der Acryl- und/oder Methacrylsäure mit 1 bis 8 C-Atome aufweisenden Alkanolen, |
| | |
| 1 bis 5 Gew.-% | wenigstens eines Monomeren aus der Gruppe umfassend Acrylsäure, Methacrylsäure sowie die K^{⊕}-, Na^{⊕}- und Ammoniumsalze dieser Säuren, |
| | |
| 0 bis 25 Gew.-% | Vinylacetat, Styrol oder deren Gemisch. |

Abschließend sei nochmals festgehalten, daß die Attraktivität der erfindungsgemäß zuzusetzenden amphiphilen Substanzen als Hilfsmittel für die radikalische wäßrige Emulsionspolymerisation nicht in einer die Oberflächenspannung des wäßrigen Mediums verringernden und damit die disperse Verteilung stabilisierenden Wirkung liegt. Vielmehr besticht ihr kontrollierender Einfluß auf die resultierende Anzahl dispergierter Polymerisatteilchen. Ihre die disperse Verteilung der erzeugten Polymerisatteilchen trotz geringer Beeinflussung der Oberflächenspannung des Wassers gleichzeitig stabilisierende Wirkung überrascht in ihrem Ausmaß. Bemerkenswert ist, daß die erfindungsgemäß resultierenden wäßrigen Polymerisatdispersionen sowohl als Bindemittel (z.B. Papierstreichmassen, Innenfarben, Fasermatten) als auch als Klebstoffe oder Additive in mineralisch abbindenden, z.B. zementösen, Massen geeignet sind.

Selbstverständlich wird das erfindungsgemäße Verfahren normalerweise unter Inertgas und unter Rühren ausgeführt. In der Regel beträgt die Menge an erfindungsgemäß zugesetzter amphiphiler Substanz 0,1 bis 15, vorzugsweise 0,5 bis 6 Gew.-%, bezogen auf die zu polymerisierenden Monomeren. Bei Bedarf kann man die micellare Anzahl in der wäßrigen Lösung aus dem micellaren Molekulargewicht (z.B. aus dem Sedimentationslauf der analytischen Ultrazentrifuge o. durch klassische Lichtstreuung zu bestimmen) und der Einwaage berechnen und so die gewünschte Polymerisatteilchenzahl im voraus festlegen.

Schließlich sei festgehalten, daß die Feststoffvolumenkonzentration von erfindungsgemäß erhältlichen wäßrigen Polymerisatdispersionen 10 bis 70 Vol.-%, oder 25 bis 70 Vol.-%, oder 35 bis 70 Vol.-% oder 45 bis 70 Vol.-% betragen kann. Der resultierende zahlenmittlere Polymerisatteilchendurchmesser kann bei 10 bis 2000 nm, 50 bis 1500 nm, 100 bis 1000 nm, 200 bis 750 nm oder 300 bis 500 nm liegen.

Auch sei festgehalten, daß erfindungsgemäß erhältliche wäßrige Polymerisatdispersionen in einfacher Weise ohne zusätzliche Hilfsmittel zu redispergierbaren Polymerisatpulvern trockenbar sind (z.B. Gefriertrocknung oder Sprühtrocknung). Dies gilt insbesonders dann, wenn die Glasübergangstemperatur der zugesetzten amphiphilen Substanz ≥ 60°C, vorzugsweise ≥ 70°C, besonders bevorzugt ≥ 80°C und ganz besonders bevorzugt ≥ 90°C bzw. ≥ 100°C beträgt. Normalerweise wird sie 250°C nicht überschreiten.

### Beispiele

1) Herstellung von amphiphilen Di-Blockpolymeren BP1 bis BP6 durch anionische Polymerisation (vgl. Macromolecules 1991, 24, 4997)
a) Herstellung der Initiatorlösung (Initiator: Diphenylhexyllithium)
   Tetrahydrofuran (Fa. Riedel de Haen, chromasolv) wurde durch Zusatz von n-Butyllithium getrocknet (die Endpunktanzeige erfolgte mittels Styrol; verbliebenes, nicht hydrolysiertes n-Butyllithium löst anionische Polymerisation des Styrol aus; die intensive rote Farbe der dabei entstehenden Styrol-Makroanionen fungiert als Indikator) und durch mehrfaches Vakuumziehen entgast. Nach beendeter Trocknung wurden 90 ml Tetrahydrofuran unter Vakuum abdestilliert und durch dreimaliges Einfrieren, Vakuumziehen und Auftauen von letzten O₂-Spuren befreit.
   Unter Inertgasatmosphäre wurden in den 90 ml wasser- und sauerstoffreien THF's zunächst 6 ml n-Butyllithium (als 1,6 molare Lösung in Hexan von der Fa. Acros) homogen gelöst. Dann wurde eine dazu äquivalente Menge (1,8 ml = 10 mmol) an Diphenylethylen (Fa. Fluka, purum) zugegeben (es entstand unmittelbar dunkelrotes Diphenylhexyllithium). Anschließend wurde das Sauerstoff- und wasserfreie Gemisch bei 20°C noch 2 Tage unter Lichtausschluß geschüttelt. Der Gehalt an gebildetem Initiator wurde abschließend durch eine Testpolymerisation von Methylmethacrylat und anschließende Molekulargewichtsbestimmung des gebildeten Polymerisats mittels Gelpermeationschromatographie bestimmt.
b) Vorbereitung der Monomeren
   I. Methylmethacrylat
      30 g Methylmethacrylat wurden durch mehrmaliges kurzzeitiges Vakuumziehen entgast. Danach wurde zur Desaktivierung protisch aktiver Verunreinigungen so viel Triethylaluminium (als 15 gew.-%ige Lösung in Hexan, Fa. Fluka, purum) zugesetzt, bis eine merkliche Gelbfärbung eintrat (dies war nach einer Zugabe von 2,4 ml der Hexanlösung der Fall). Dann wurde nochmals kurzzeitig Vakuum gezogen und schließlich 2/3 an reinem Monomeren unter Vakuum abdestilliert, eingefroren und nochmals Vakuum gezogen.
   II. tert.-Butylacrylat
      Mit einer entsprechenden Menge tert.-Butylacrylat wurde in entsprechender Weise wie mit den 30 g Methylmethacrylat verfahren. Abschließend wurde das tert.-Butylacrylat jedoch mit Sauerstoff- und wasserfreiem THF auf das 3-fache seines Volumens verdünnt. Bis zum Gebrauch wurde auch diese tert.-Butylacrylat/THF-Lösung gefroren aufbewahrt.
c) Anionische Polymerisation (sauerstoff- und wasserfrei)
   In einem Polymerisationsgefäß wurden 1,5 g wasserfreies LiCl (verbessert die Initiatorqualität durch Auflösung von Dimeren etc.) vorgelegt. Dann wurden 400 ml Tetrahydorfuran zukondensiert und 66,35 g der vorbereiteten Initiatorlösung zugesetzt und das entstehende Gemisch mittels flüssigem Stickstoff bis knapp über den Gefrierpunkt von Tetrahydrofuran (-108,5°C) gekühlt. Unter kräftigem Rühren wurden anschließend innerhalb von 2 Minuten 23 g tert.-Butylacrylat (als vorbereitete THF-Lösung) zugetropft. Das flüssige Gemisch wurde 15 min unter Rühren bei -78°C gehalten. Dann wurden unter fortgeführtem Rühren innerhalb von 1 Minute 18 g des vorbereiteten Methylmethacrylat zugetropft und das Reaktionsgemisch weitere 15 min bei -78°C gerührt. Anschließend wurde die anionische Polymerisation durch Zusatz von 5 ml entgastem und mit wenigen Tropfen Essigsäure versetztem Methanol abgebrochen. Das Reaktionsgemisch wurde sodann auf Raumtemperatur erwärmt, ein Teil des Lösungsmittels im Vakuum abgezogen und dann das gebildete Blockpolymer in 1,5 1 eines Methanol/Wasser- (im Volumenverhältnis 2:1)-Gemisches ausgefällt und über Nacht bei 50°C im Vakuumschrank getrocknet.
   Mittels ¹H-NMR (200 MHz) in einer CDCl₃-Lösung wurde ein molares Verhältnis von 1:1 der eingesetzten Ausgangsmonomeren im gebildeten Blockpolymer verifiziert. Das relative zahlenmittlere Molekulargewicht Mₙ des gebildeten Blockpolymeren wurde mittels Gelpermeationschromatographie zu 8758 ermittelt. Das relative gewichtsmittlere Molekulargewicht M_{w} betrug 9957. Das häufigste relative Molekulargewicht lag bei 9678. Dem entspricht ein mittleres Blockpolymer von

   [tert.-Butylacrylat]₃₉ [Methylmethacrylat]₃₉.
d) Selektive Hydrolyse des tert.-Butylacrylat
   20 g des Blockpolymeren wurden in 100 ml Dioxan gelöst und mit 11 ml 37 gew.-%iger wäßriger HCl 4 h bei 80°C gerührt. Nach Abkühlung auf 25°C wurde das resultierende Polymer in n-Heptan (p.a., Fa. Merck) gefällt, abfiltriert, mit n-Heptan gewaschen und anschließend 1 Woche bei 80°C im Vakuumschrank getrocknet (in allen anderen Fällen erfolgte die Isolierung durch Gefriertrocknung aus Dioxan).

Mittels ¹H-NMR (200 MHz) in einer CD₃OD-Lösung wurde die Selektivität und Vollständigkeit der Hydrolyse bestätigt.
Es wurde somit ein hydrophiles Blockpolymer BP1

[Acrylsäure]₃₉ [Methylmethacrylat]₃₉

erhalten.
In entsprechender Weise wurden die nachfolgenden hydrophilen Blockpolymere BP2 bis BP7 hergestellt:
BP2: [Acrylsäure]₇₉ [Methylmethacrylat]₃₉
BP3: [Acrylsäure]₃₃ [Methylmethacrylat]₃₆
BP4: [Acrylsäure]₁₀₅ [Methylmethacrylat]₃₅
BP5: [Acrylsäure]₃₀ [Methylmethacrylat]₂₈
BP6: [Acrylsäure]₃₀ [Methylmethacrylat]₂₅
BP7: [Acrylsäure]₂₆ [Methylmethacrylat]₁₈

Von der TH. Goldschmidt AG wurde zusätzlich das Blockpolymer BP8 erworben (= Versuchsprodukt MA1007 der TH. Goldschmidt AG) :
BP8: [Methylmethacrylat]₁₀ [Methacrylsäure]₈.

2) Bestimmung der Oberflächenspannung von micellaren wäßrigen Lösungen der Na-Salze der Di-Blockcopolymere aus 1)
Die Bestimmungen der Oberflächenspannung erfolgten mit einem Ringtensiometer der Fa. Lauda (TElc) bei 20°C und 1 atm. Die untersuchten wäßrigen Lösungen waren auf direktem Weg erhältlich. Die erhaltenen Ergebnisse zeigt die nachfolgende Tabelle 1.

**Tabelle 1**

| Na-Salze von | Konzentration (mol/l) | σ (mN/m) |
|---|---|---|
| BP8 | 1,96·10⁻⁶ | 65,52 |
| BP8 | 2.94·10⁻⁶ | 62,44 |
| BP8 | 5,88·10⁻⁶ | 57,42 |
| BP8 | 9,79·10⁻⁶ | 53 |
| BP8 | 1,47·10⁻⁵ | 50,81 |
| BP8 | 2,44·10⁻⁵ | 48,41 |
| BP8 | 3,90·10⁻⁵ | 46,32 |
| BP8 | 6,11·10⁻⁵ | 44,82 |
| BP8 | 9,64·10⁻⁵ | 43,61 |
| BP8 | 1.51·10⁻⁴ | 42,69 |
| BP8 | 2,36·10⁻⁴ | 41,77 |
| BP8 | 3,66·10⁻⁴ | 40,91 |
| BPS | 5,60·10⁻⁴ | 40,13 |
| BP8 | 8,40·10⁻⁴ | 39,53 |
| BP8 | 1,23·10⁻³ | 39,01 |
| BP8 | 1,74·10⁻³ | 38,55 |
| BP8 | 2,35·10⁻³ | 38,29 |
| BP8 | 3,02·10⁻³ | 37,59 |
| | | |
| BP1 | 4,90·10⁻⁷ | 71,56 |
| BP1 | 7,35·10⁻⁷ | 71,56 |
| BP1 | 1,47·10⁻⁶ | 71,56 |
| BP1 | 2,45·10⁻⁶ | 71,51 |
| BP1 | 3,67·10⁻⁶ | 71,48 |
| BP1 | 6,10·10⁻⁶ | 71,43 |
| BP1 | 9,74·10⁻⁶ | 71,39 |
| BP1 | 1,53·10⁻⁵ | 71,33 |
| BP1 | 2,41·10⁻⁵ | 71,27 |
| BP1 | 3,77·10⁻⁵ | 71,16 |
| BP1 | 5,90·10⁻⁵ | 71,11 |
| BP1 | 9,15·10⁻⁵ | 71,08 |
| BP1 | 1,40·10⁻⁴ | 71,06 |
| BP1 | 2,10·10⁻⁴ | 71,02 |
| BP1 | 3,07·10⁻⁴ | 71,01 |
| BP1 | 4,34·10⁻⁴ | 71 |
| BP1 | 5,87·10⁻⁴ | 70,88 |
| BP1 | 7,54·10⁻⁴ | 70,53 |
| | | |
| BP2 | 5.2·10⁻⁴ | 63,1 |
| BP3 | 1,3·10⁻³ | 64,5 |
| BP4 | 4,5·10⁻³ | 63,6 |
| BP5 | 1·10⁻⁵ | 57,1 |
| BP6 | 1,1·10⁻³ | 48,4 |
| BP7 | 1,4·10⁻³ | 46,7 |

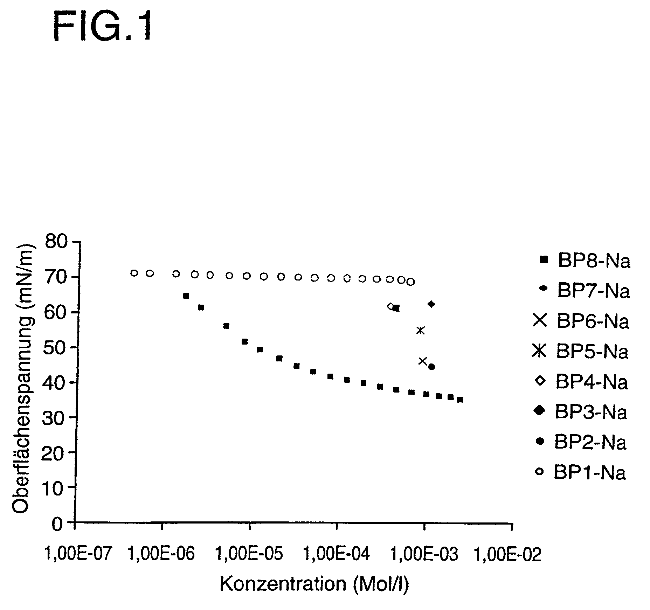

Eine graphische Darstellung der Ergebnisse zeigt die Figur 1. Sie weist aus, daß die Natriumsalze von BP8, BP7, BP6 und BP5 keine erfindungsgemäßen amphiphilen Substanzen sind. Insbesondere das Na-Salz von BP8 verhält sich wie ein klassisches Tensid. Entsprechende Ergebnisse wie für die Na-Salze wurden für die Ammoniumsalze erhalten.
3) Herstellung wäßriger Polymerisatdispersionen D1 bis D13 nach der Methode der radikalischen wäßrigen Emulsionspolymerisation unter Zusatz der NH^{⊕}₄-Salze von BP1 und BP8 als amphiphile Di-Blockpolymeren
Eine ammoniakalische Lösung des Blockpolymeren wurde, gegebenenfalls unter Zusatz von Wasser, ins Polymerisationsgefäß vorgelegt. Dann wurde die Vorlage auf 90°C erwärmt und anschließend auf einmal mit 30 Gew.-% eines Zulauf 2 versetzt. Zwei Minuten später wurden dem Polymerisationsgefäß die verbliebene Menge an Zulauf 2 (innerhalb von 2 h) und ein Zulauf 1 (innerhalb von 1 h und 30 min) zeitgleich beginnend unter Aufrechterhaltung der 90°C räumlich getrennt kontinuierlich zugeführt. Nach Beendigung der Zuläufe wurde das Polymerisationsgemisch noch 1 h bei 90°C gerührt und dann auf Raumtemperatur abgekühlt. Es wurden im wesentlichen monodisperse wäßrige Polymerisatdispersionen erhalten, zu deren Charakterisierung in der analytischen Ultrazentrifuge die d₅₀-Werte (50 Gew.-% des Polymerisats weist einen Teilchendurchmesser ≥ d₅₀ auf und 50 Gew.-% des Polymerisats weist einen Teilchendurchmesser ≤ d₅₀ auf) ermittelt wurden.
Nachfolgende Tabellen 2 und 3 geben die Zusammensetzungen von Vorlage, Zulauf 1 und Zulauf 2 sowie die d₅₀-Werte der resultierenden wäßrigen Polymerisatdispersionen wieder.

**Tabelle 2**

| | | D1 | D2 | D3 | D4 | D5 |
|---|---|---|---|---|---|---|
| Vorlage | Lsg. aus | | | | | |
| | BP1 | 0,03 g | 0,15 g | 0,3 g | 1,5 g | 3 g |
| | NH₃ | 0,003 g | 0,015 g | 0,03 g | 0,15 g | 0,3 g |
| | Wasser | 1,47 g | 7,335 g | 14,67 g | 28,35 g | 56,7 g |
| | | | | | | |
| | Wasser | 54 g | 48 g | 41 g | 25 g | ..... |
| Zulauf 1 | Methylmethacrylat | 15 g | 15 g | 15 g | 15 g | 15 g |
| | n-Butylacrylat | 15g | 15g | 15g | 15g | 15g |
| Zulauf 2 | Natriumperoxodisulfat | 0,15g | 0,15 g | 0,15g | 0,15g | 0,15g |
| | Wasser | 15g | 15g | 15g | 15g | 15g |
| d₅₀ (nm) | | 112 | 84 | 58 | 38 | 32 |

**Tabelle 3**

| | | D6 | D7 | D8 | D9 | D10 | D11 | D12 | D13 |
|---|---|---|---|---|---|---|---|---|---|
| Vorlage | Lsg. aus | | | | | | | | |
| | BP8 | 0,1 | 0,5 | 2 | 5 | 10 | 15 | 20 | 25 |
| | 25 gew.-%ige wäßrige NH₃-Lsg. | 3,2 | 3,2 | 6,4 | 6,4 | 6,4 | 6,4 | 6,4 | 6,4 |
| Zulauf 1 | Wasser | 177 | 178 | 181 | 188 | 200 | 211 | 223 | 235 |
| | Methylmethacrylat | 50 | 50 | 50 | 50 | 50 | 50 | 50 | 50 |
| | n-Butylacrylat | 50 | 50 | 50 | 50 | 50 | 50 | 50 | 50 |
| Zulauf 2 | Wasser | 60 | 60 | 60 | 60 | 60 | 60 | 60 | 60 |
| | Natriumperoxodisulfat | 2 | 2 | 2 | 2 | 2 | 2 | 2 | 2 |
| d₅₀ (nm) | | 157 | 129 | 103 | 86 | 40 | 31 | 26 | 26 |

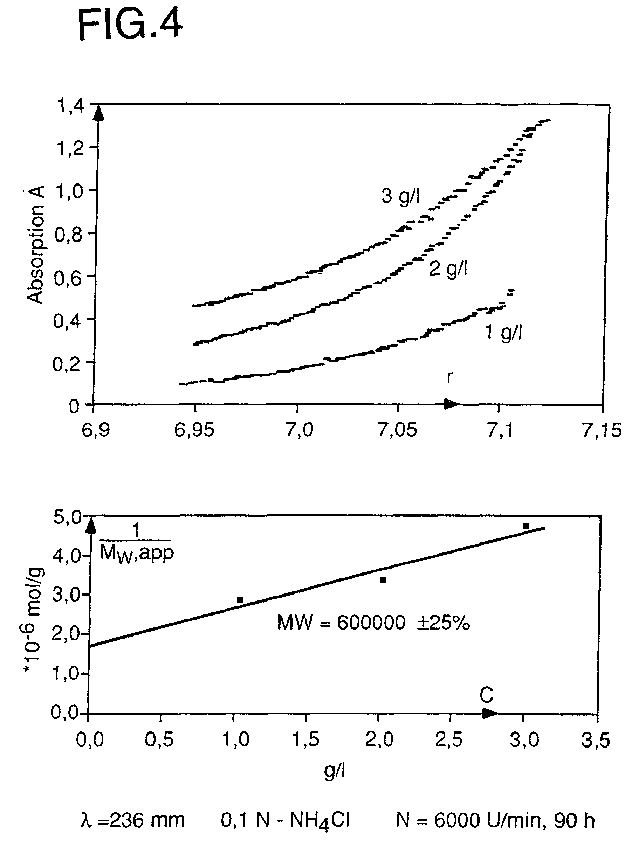

Bei vorgegebener Monomerenmenge und im wesentlichen vollständigem Polymerisationsumsatz ist die Anzahl gebildeter Polymerisatteilchen umgekehrt proportional zur dritten Potenz des Teilchendurchmesser.

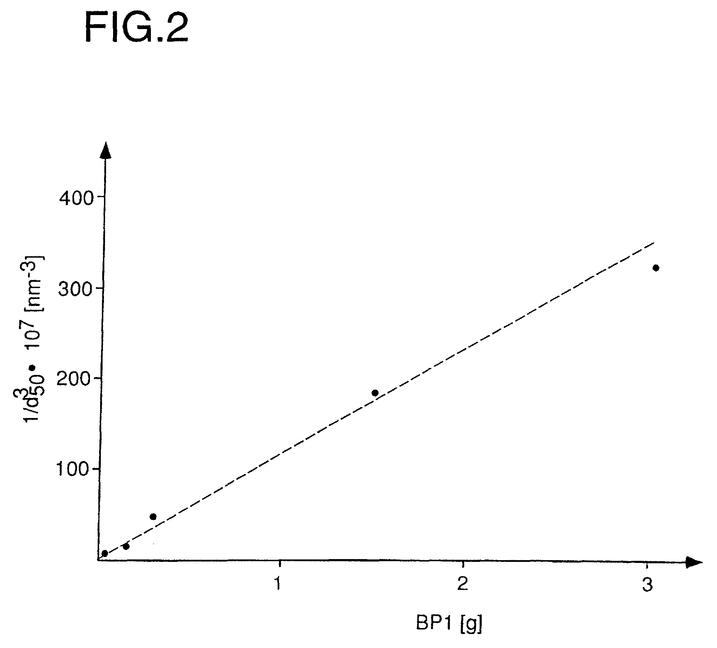

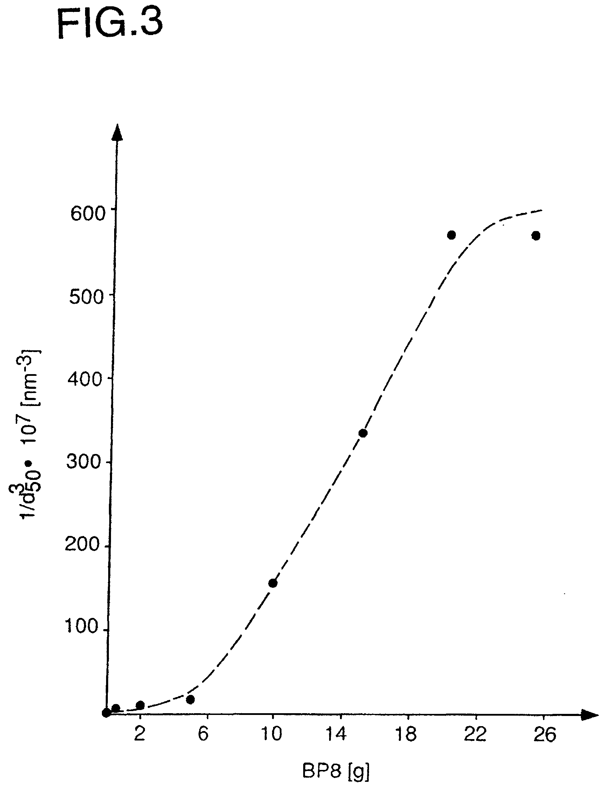

Die Figuren 2 und 3 zeigen eine graphische Darstellung von (1/d³₅₀)·10⁷ [nm⁻³] der in den Tabellen 2 und 3 aufgeführten d₅₀-Werte als Funktion der zur Polymerisation zugesetzten Menge an BP1 bzw. BP8.
Während sich im Fall der erfindungsgemäßen amphiphilen Substanz ein im wesentlichen linearer Zusammenhang ergibt, weist die Fig. 3 im Bereich geringer zugesetzter Mengen an BP8 eine nahezu konstante Anzahl an gebildeten Polymerisatteilchen aus. Dies wird darauf zurückgeführt, daß mit einer zunehmenden Menge an zugesetztem BP8 zwar die vorgelegte Anzahl an Micellen wächst, selbige jedoch nicht quantitativ initiiert werden, sondern ein Teil von ihnen sich im Verlauf der Polymerisatteilchenbildung im anderen Teil wieder auflöst, um das Polymerisatteilchenwachstum im selbigen zu stabilisieren. (wurden die Polymerisationen nicht nach der Zulauffahrweise durchgeführt, sondern alle Komponenten im Gemisch vorgelegt und dann auf die Reaktionstemperatur erhitzt, wurden im wesentlichen identische Ergebnisse erhalten).
4) Untersuchungen wäßriger Lösungen des Ammoniumsalzes von BP1 und dieses Salz enthaltender wäßrige Polymerisatdispersionen mit der analytischen Ultrazentrifuge
Untersucht wurden wäßrige Lösungen, die pro Liter jeweils 6, 3, 2 oder 1 g an BP1 sowie pro Gramm an BP1 0,4 g einer 25 gew.-%igen wäßrigen NH₃-Lösung enthielten. Ferner enthielten die untersuchten wäßrigen Lösungen pro Liter 0,1 Mol NH₄Cl, um die Dissoziation von Polyanion und Ammoniumionen im Zentrifugalfeld zu erleichtern. Die Untersuchungstemperatur betrug 20°C. Im Sedimentationslauf (40000 Umdrehungen pro Minute) trat in allen Fällen lediglich ein unimodaler Schlierenpeak auf. Die Sedimentationsgeschwindigkeit betrug in allen Fällen 7,2 Svedberg. Die Höhe der Sedimentationsgeschwindigkeit wies aus, daß die sedimentierenden Einheiten keine BP1 Unimeren sondern Aggregate aus selbigen sein müssen, was den micellaren Charakter der untersuchten wäßrigen Lösungen ausweist. Da der Schlierenpeak wenigstens 98 % der eingezogenen Menge an BP1 umfaßte, wiesen diese Sedimentationsläufe aus, daß alle micellaren wäßrigen Lösungen weniger als 2 % der Einwaage an BP1 gelöst enthielten. Membranosmometrische Untersuchungen bestätigten dieses Ergebnis (für relative Molekulargewichte < 10000 durchlässige Celluloseacetatmembran), in dem der sich aufbauende osmotische Druck als Funktion der Zeit kein Maximum durchlief.
Aus den exponentiellen Konzentrationsverläufen von mit den vorgenannten wäßrigen Lösungen durchgeführten Sedimentationsdiffusionsgleichgewichtsläufen (Absorption als Funktion des Micellradius, λ = 236 nm, 6000 Umdrehungen pro min, 90 h) wurden das apparente gewichtsmittlere Molekulargewicht der im Zentrifugalfeld wandernden Einheiten als Funktion der Lösungskonzentration bestimmt. Die konzentrationsabhängige Auftragung der Reziprokwerte ergab bei linearer Extrapolation auf die Konzentration 0 ein relatives M_{w} der wandernden Einheit von 600000 ± 25 % (vgl. Fig. 4).
Bei in entsprechender Weise durchgeführten Sedimentationsläufen von D5 (enthält die größte Menge BP1) in unterschiedlichsten Verdünnungen war kein freies, unimer gelöstes, BP1 nachweisbar. Löste man D5 in überschüssigem Tetrahydrofuran auf und überschichtete diese Lösung mit reinem Tetrahydrofuran, wurde ein Schlierenpeak erhalten, dessen Sedimentationsgeschwindigkeit von 0,9 Svedberg ein relatives Molekulargewicht der Sedimentierenden Einheit von grob 7000 auswies, was unimer gelöstem BP1 im wesentlichen entspricht.
Setzte man D5 zusätzliches Ammoniumsalz von BP1 zu und überließ das Gemisch unter schwachem Rühren bei 20°C während 40 h sich selbst, enthielt der Schlierenpeak des unimeren BP1 auch nach dieser Zeit wenigstens 99 % der nachträglich zugesetzten Menge an BP1. D.h., das amphiphile Blockcopolymer zog nicht auf die dispergierten Polymerisatteilchen auf, seine micellare Lösung blieb erhalten.
5) Versuch der Bestimmung der kritischen Micellbildungskorizentration des Ammoniumsalzes von BP1 in Wasser bei 20°C und 1 atm mittels klassischer Lichtstreuung
Während sich aus Figur 1 für das Na-Salz von BP8 eine c.m.c. von knapp unter 10^{-4,5} mol/l entnehmen ließ, war die konzentrationsabhängige Oberflächenspannungsmessung im Fall des Na-Salzes von BP1 zur c.m.c. Bestimmung nicht mehr geeignet. Es wurde daher deren Bestimmung mittels klassischer Lichtstreuung versucht.
Dazu wurde eine Stammlösung von 1 g BP1, 0,4 g 25 gew.-%iger NH₃-Lösung und 300 g Wasser hergestellt, die mittels 0,1 molarer wäßriger NH₄Cl-Lösung verdünnt wurde. Bestimmt wurde der Unterschied der Streuintensität (in Vorwärtsrichtung in Winkelsegment 6 bis 7°) zwischen Lösungsmittel und Lösung als Funktion der Lösungskonzentration an BP1 mit einem low-angle laser light-scattering photometer KMX-6 der Fa. Chromatix (USA) in Anwendung eines He/Ne-Lasers (λ = 633 nm).

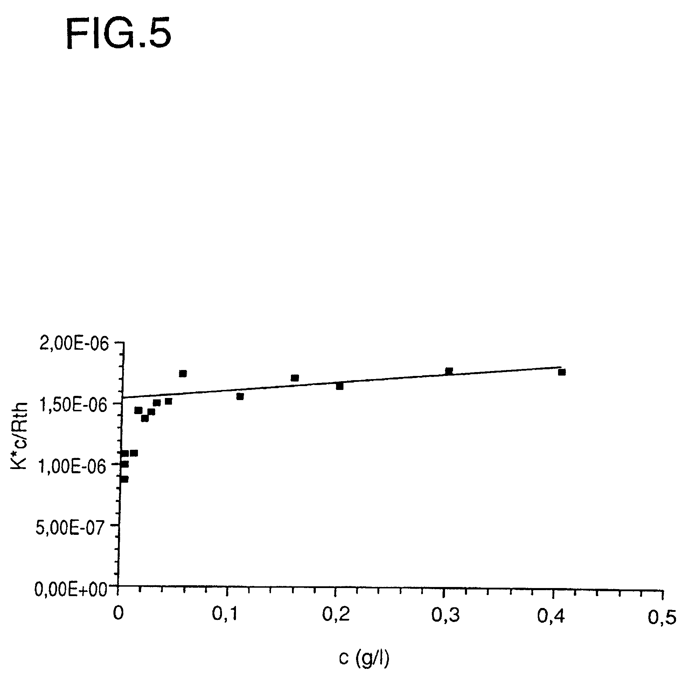

Figur 5 zeigt eine konzentrationsabhängige Auftragung der Kehrwerte dieser Streuintensitätsunterschiede.
Der konzentrationsabhängige Verlauf weist aus (kein Abbiegen zu höheren Kehrwerten mit zunehmender Verdünnung), daß die c.m.c selbst bei einer Verdünnung auf 10⁻⁷ mol/l nicht erreicht wird. Der in Figur 5 durch lineare Extrapolation auf c=0 ermittelte Extrapolationswert reflektiert einen gewichtsmittleren relativen Molekulargewichtswert von 650000 ± 10 % und bestätigt die in der analytischen Ultrazentrifuge erhaltenen Ergebnisse.
6) Förster-Transfermessungen zum Austausch von Unimeren zwischen Micellen
Um den Austausch von [Acrylsäure]ᵢ [Methylmethacrylat]ⱼ Di-Blockpolymeren in ihren micellaren wäßrigen Lösungen bei 20°C zu untersuchen, wurde Di-Blockpolymere vergleichbarer Zusammensetzung einmal mit dem Donor Naphthalin und einmal mit dem Akzeptor Pyren kovalent markiert:

[Acrylsäure]₈₂ [Methylmethacrylat⁆₈₂-Pyren

und

[Acrylsäure]₈₆ [Methylmethacrylat⁆₇₉-Naphthalin.

Dann wurden von beiden Di-Blockpolymeren wäßrige Lösungen ihres Na-Salzes hergestellt (Blockpolymer in NaOH haltigem Wasser lösen), die neben Wasser je Liter Lösung enthielten:
200 mg Di-Blockpolymer (vollsauer gerechnet) und 42,4 bzw. 44,8 mg NaOH.
In einer Kuvette eines Blitzlampen-Fluoreszenzspektrometers (Edinburgh Instruments, FL 900 CDT, Meßmethode: zeitaufgelöste Einzelphotonenzählung (TCSPC)) wurden gleiche Volumina der beiden getrennt hergestellten wäßrigen Lösungen miteinander vermischt. Zeitaufgelöste Fluoreszenzzerfälle (Anregungswellenlänge: 290 nm (mit Wasserstoff (0,46 bar) gefüllte Blitzlampe), Pulsdauer: 1 ns, Pulse/sec: 4000, Nachweiswellenlänge (Naphthalin) : 340 nm) des Naphthalin Donors zeigten innerhalb von 20 h keine Veränderung. Desgleichen galt bei 2-stündigem Erwärmen auf 80°C.
7) Beispiele für weitere erfindungsgemäße wäßrige radikalische Emulsionspolymerisationen
Gemäß Beispiel 1) wurden nachfolgende Di-Blockcopolymere hergestellt:
a) [Acrylsäure]₃₀ [Methylmethacrylat]₃₅
b) [Acrylsäure]₈₀ [Methylmethacrylat]₄₀
c) [Methylmethacrylat]₄₉ [Acrylaäure]₈₈
d) [Methylmethacrylat]₇₀ [Acrylsäure]₇₅
e) [Acrylsäure]₆₂₀ [Methylmethacrylat]₆₂₀

Die Ammoniumsalze der Di-Blockcopolymere a) bis d) wurden wie folgt zur radikalischen wäßrigen Emulsionspolymerisation eingesetzt:
Die Monomeren (im Gemisch aus 50 Gew.-% n-Butylacrylat und 50 Gew.-% Methylmethacrylat), Wasser, 0,5 Gew.-% Natriumperoxodisulfat (bezogen auf die Monomeren) und X pphm (bezogen auf das Gewicht der Monomeren) der vorgenannten Ammoniumsalze wurden miteinander vermischt und unter Rühren auf die Polymerisationstemperatur von 90°C erwärmt und bei dieser Temperatur bis zu einem Umsatz von > 99 Gew.-% polymerisiert (gewählter Feststoffgehalt: 30 Gew.-%). In allen Fällen wurden wäßrige Polymerisatdispersionen ausreichender Stabilität erhalten.
Die angewandten Xpphm waren:

| | |
|---|---|
| 1 pphm | Di-Blockcopolymer a); |
| 1 pphm | Di-Blockcopolymer b); |
| 2 pphm | Di-Blockcopolymer b); |
| 1 pphm | Di-Blockcopolymer c); |
| 2 pphm | Di-Blockcopolymer c); |
| 1 pphm | Di-Blockcopolymer d); |
| 2 pphm | Di-Blockcopolymer d); |

Die Lichtdurchlässigkeit (ein indirektes Maß der Polymerisatteilchengröße) der wäßrigen Polymerisatdispersionen (Schichtdicke: 2 cm, auf 0,01 Gew.-% Feststoffgehalt verdünnte wäßrige Polymerisatdispersion, 25°C, normiert auf Wasser (LD-Wert = 100), Transmission von weißem Licht) lag in allen Fällen bei Werten ≥ 91.
100 mg des Di-Blockpolymeren e) wurden in Tetrahydrofuran gelöst. Dann wurde ein Äquivalent wäßrige Natronlauge zugetropft und durch Abdampfen des THF die wäßrige Lösung des Na-Salzes des Di-Blockcopolymer e) erzeugt. Die Lösung wurde auf 20 g mit Wasser verdünnt. Dann wurden 1 g Methylmethacrylat und 5 mg Na₂P₂O₈ zugesetzt und das resultierende Gemisch unter Rühren auf die Polymerisationstemperatur von 80°C erhitzt und bis zu einem Umsatz > 95 Gew.-% bei dieser Temperatur polymerisiert. Es wurde eine wäßrige Polymerisatdispersion befriedigender Stabilität erhalten.
Alle Polymerisationen waren in befriedigender Weise reproduzierbar.

## Patentansprüche

1. Verfahren zur Herstellung einer wäßrigen Polymerisatdispersion durch Polymerisation von wenigstens eine Vinylgruppe aufweisenden Monomeren nach der Methode der radikalischen wäßrigen Emulsionspolymerisation, bei dem man dem Polymerisationsgefäß vor und/oder während der Polymerisation eine amphiphile Substanz zusetzt, die **dadurch gekennzeichnet ist, daß**
- 1 l Wasser bei 20°C und 1 atm wenigstens 10⁻⁴ mol der amphiphilen Substanz in micellarer Lösung aufzunehmen vermag;
- die kritische Micellbildungskonzentration der amphiphilen Substanz bei 20°C und 1 atm in Wasser < 10⁻⁶ mol/l beträgt;
- die Oberflächenspannung σ einer wäßrigen und/oder micellaren Lösung der amphiphilen Substanz im molaren Konzentrationsbereich (0 < C_{M} ≤10⁻⁴) mol/l bei 20°C und 1 atm den Wert 60 mN/m nicht unterschreitet und
- die amphiphile Substanz ein Blockpolymer ist.

2. Verfahren nach Anspruch 1, **dadurch gekennzeichnet, daß** die kritische Micellbildungskonzentration der amphiphilen Substanz bei 20°C und 1 atm in Wasser ≤ 10^{-6,25} mol/l beträgt.

3. Verfahren nach Anspruch 1, **dadurch gekennzeichnet, daß** die kritische Micellbildungskonzentration der amphiphilen Substanz bei 20°C und 1 atm in Wasser ≤ 10^{-6,5} mol/l beträgt.

4. Verfahren nach Anspruch 1, **dadurch gekennzeichnet, daß** die kritische Micellbildungskonzentration der amphiphilen Substanz bei 20°C und 1 atm in Wasser ≤ 10^{-6,75} mol/l beträgt.

5. Verfahren nach Anspruch 1, **dadurch gekennzeichnet, daß** die kritische Micellbildungskonzentration der amphiphilen Substanz bei 20°C und 1 atm in Wasser ≤ 10⁻⁷ mol/l beträgt.

6. Verfahren nach Anspruch 1, **dadurch gekennzeichnet, daß** die kritische Micellbildungskonzentration der amphiphilen Substanz bei 20°C und 1 atm in Wasser ≤ 10^{-7,25} mol/l beträgt.

7. Verfahren nach Anspruch 1, **dadurch gekennzeichnet, daß** die kritische Micellbildungskonzentration der amphiphilen Substanz bei 20°C und 1 atm in Wasser ≤ 10^{-7,5} mol/l beträgt.

8. Verfahren nach Anspruch 1 bis 7, **dadurch gekennzeichnet, daß** die Oberflächenspannung σ einer wäßrigen molekularen und/oder micellaren Lösung der amphiphilen Substanz im molaren Konzentrationsbereich (0 < C_{M} ≤ 10⁻⁴)mol/l bei 20°C und 1 atm den Wert 62,5 mN/m nicht unterschreitet.

9. Verfahren nach Anspruch 1 bis 7, **dadurch gekennzeichnet, daß** die Oberflächenspannung σ einer wäßrigen molekularen und/oder micellaren Lösung der amphiphilen Substanz im molaren Konzentrationsbereich (0 < C_{M} ≤ 10⁻⁴)mol/l bei 20°C und 1 atm den Wert 65 mN/m nicht unterschreitet.

10. Verfahren nach Anspruch 1 bis 7, **dadurch gekennzeichnet, daß** die Oberflächenspannung σ einer wäßrigen molekularen und/oder micellaren Lösung der amphiphilen Substanz im molaren Konzentrationsbereich (0 < C_{M} ≤ 10⁻⁴) mol/l bei 20°C und 1 atm den Wert 67,5 mN/m nicht unterschreitet.

11. Verfahren nach Anspruch 1 bis 7, **dadurch gekennzeichnet, daß** die Oberflächenspannung σ einer wäßrigen molekularen und/oder micellaren Lösung der amphiphilen Substanz im molaren Konzentrationsbereich (0 < C_{M} ≤ 10⁻⁴) mol/l bei 20°C und 1 atm den Wert 70 mN/m nicht unterschreitet.

12. Verfahren nach Anspruch 1 bis 7, **dadurch gekennzeichnet, daß** die Oberflächenspannung σ einer wäßrigen molekularen und/oder micellaren Lösung der amphiphilen Substanz im molaren Konzentrationsbereich (0 < C_{M} ≤ 10⁻⁴)mol/l bei 20°C und 1 atm den Wert 71,5 mN/m nicht unterschreitet.

13. Verfahren nach Anspruch 1 bis 12, **dadurch gekennzeichnet, daß** 1 l Wasser bei 20°C und 1 atm wenigstens 10⁻³ mol der amphiphilen Substanz in micellarer Lösung aufzunehmen vermag.

14. Verfahren nach Anspruch 1 bis 12, **dadurch gekennzeichnet, daß** 1 l Wasser bei 20°C und 1 atm wenigstens 10⁻² mol der amphiphilen Substanz in micellarer Lösung aufzunehmen vermag.

15. Verfahren nach Anspruch 1 bis 12, **dadurch gekennzeichnet, daß** 1 l Wasser bei 20°C und 1 atm wenigstens 10⁻¹ mol der amphiphilen Substanz in micellarer Lösung aufzunehmen vermag.

16. Verfahren nach Anspruch 1 bis 12, **dadurch gekennzeichnet, daß** 1 l Wasser bei 20°C und 1 atm wenigstens 1 mol der amphiphilen Substanz in micellarer Lösung aufzunehmen vermag.

17. Verfahren nach Anspruch 1 bis 16, **dadurch gekennzeichnet, daß** die mittlere Verweilzeit eines Unimeren innerhalb einer Micelle in einer 10⁻⁵ molaren micellaren wäßrigen Lösung der amphiphilen Substanz bei 20°C und 1 atm wenigstens 15 min beträgt.

18. Verfahren nach Anspruch 1 bis 16, **dadurch gekennzeichnet, daß** die mittlere Verweilzeit eines Unimeren innerhalb einer Micelle in einer 10⁻⁵ molaren micellaren wäßrigen Lösung der amphiphilen Substanz bei 20°C und 1 atm wenigstens 30 min beträgt.

19. Verfahren nach Anspruch 1 bis 16, **dadurch gekennzeichnet, daß** die mittlere Verweilzeit eines Unimeren innerhalb einer Micelle in einer 10⁻⁵ molaren micellaren wäßrigen Lösung der amphiphilen Substanz bei 20°C und 1 atm wenigstens 1 h beträgt.

20. Verfahren nach Anspruch 1 bis 16, **dadurch gekennzeichnet, daß** die mittlere Verweilzeit eines Unimeren innerhalb einer Micelle in einer 10⁻⁵ molaren micellaren wäßrigen Lösung der amphiphilen Substanz bei 20°C und 1 atm wenigstens 10 h beträgt.

21. Verfahren nach Anspruch 1 bis 16, **dadurch gekennzeichnet, daß** die mittlere Verweilzeit eines Unimeren innerhalb einer Micelle in einer 10⁻⁵ molaren micellaren wäßrigen Lösung der amphiphilen Substanz bei 20°C und 1 atm wenigstens 20 h beträgt.

22. Verfahren nach Anspruch 1 bis 21, **dadurch gekennzeichnet, daß** die amphiphile Substanz als vorgebildete micellare Lösung zugesetzt wird.

23. Verfahren nach Anspruch 22, **dadurch gekennzeichnet, daß** die amphiphile Substanz als vorgebildete wäßrige micellare Lösung zugesetzt wird.

24. Verfahren nach Anspruch 23, **dadurch gekennzeichnet, daß** die vorgebildete wäßrige Lösung eine Lösung gefrorener Micellen ist.

25. Verfahren nach Anspruch 1 bis 24, **dadurch gekennzeichnet, daß** das Blockpolymer ein Di-Blockpolymer der allgemeinen Formel I oder I'
[A]ₐ [B]_{b} (I),
[B]_{b} [A]ₐ (I')
ist, mit
[B]_{b} = ein Co- oder ein Homopolymerblock aus Monomeren der Gruppe umfassend Styrol, Methylstyrol, Chlorstyrol, Vinylester von C₁- bis C₈-Alkancarbonsäuren, Ester aus einer 3 bis 6 C-Atome aufweisenden α,β-monoethylenisch ungesättigten Carbonsäure und einem C₁- bis C₈-Alkanol, Butadien und Ethylen,
[A]ₐ = ein Co- oder ein Homopolymerblock aus Monomeren der Gruppe umfassend 3 bis 6 C-Atome aufweisende α,β-monoethylenisch ungesättigte Mono- und Dicarbonsäuren, 2-Acrylamido-2-methylpropansulfonsäure, Styrolsulfonsäure, Vinylsulfonsäure sowie die Alkalimetall- und Ammoniumsalze der vorgenannten Säuren, N-Vinylpyrrolidon, Vinylalkohol, Ethylenglykol und Propylenglykol,
b = eine ganze Zahl, die die im Polymerblock [B]_{b} chemisch gebunden enthaltene Anzahl an Monomeren wiedergibt, wobei b ≥ 30 gilt und
a = eine ganze Zahl, deren Betrag wenigstens 40 %, vorzugsweise wenigstens 75 %, des Betrags von b ist und die die im Polymerblock [A]ₐ chemisch gebunden enthaltene Anzahl an Monomeren wiedergibt.

26. Verfahren nach Anspruch 1 bis 24, **dadurch gekennzeichnet, daß** das Blockpolymer ein Tri-Blockpolymer der allgemeinen Formel II
[A]_{a'} [B]_{b} [A']_{a"} (II),
ist mit
[B]_{b} = ein Co- oder ein Homopolymerblock aus Monomeren der Gruppe umfassend Styrol, Methylstyrol, Chlorstyrol, Vinylester von C₁- bis C₈-Alkancarbonsäuren, Ester aus einer 3 bis 6 C-Atome aufweisenden α,β-monoethylenisch ungesättigten Carbonsäure und einem C₁- bis C₈-Alkanol, Butadien und Ethylen,
[A]_{a'} und [A']_{a''} = unabhängig voneinander ein Co- oder ein Homopolymerblock aus Monomeren der Gruppe umfassend 3 bis 6 C-Atome aufweisende α,β-monoethylenisch ungesättigte Mono- und Dicarbonsäuren, 2-Acrylamido-2-methylpropansulfonsäure, Styrolsulfonsäure. Vinylsulfonsäure sowie die Alkalimetall- und Ammoniumsalze der vorgenannten Säuren, N-Vinylpyrrolidon, Vinylalkohol, Ethylenglykol und Propylenglykol,
b = eine ganze Zahl, die die im Polymerblock [B]_{b} chemisch gebunden enthaltene Anzahl an Monomeren wiedergibt, wobei b ≥ 30 gilt und
a', a" = unabhängig voneinander eine ganze Zahl, deren Betrag wenigstens 20 %, vorzugsweise wenigstens 40 %, des Betrags von b ist und die die im Polymerblock [A]_{a'} bzw. [A]_{a"} chemisch gebunden enthaltene Anzahl an Monomeren wiedergibt.

27. Verfahren nach Anspruch 25 oder 26, **dadurch gekennzeichnet, daß** [B]_{b} ein Co- oder ein Homopolymerblock aus Monomeren der Gruppe umfassend Styrol, Methylstyrol, Chlorstyrol, Vinylacetat, Vinylpropionat, Methylacrylat, Ethylacrylat, n-Butylacrylat, 2-Ethylhexylacrylat und Methylmethacrylat ist.

28. Verfahren nach Anspruch 25 oder 26, **dadurch gekennzeichnet, daß** [B]_{b} ein Co- oder ein Homopolymerblock aus Monomeren der Gruppe umfassend Styrol, Methylmethacrylat, n-Butylacrylat und 2-Ethylhexylacrylat ist.

29. Verfahren nach Anspruch 25 oder 26, **dadurch gekennzeichnet, daß** [B]_{b} ein Co- oder ein Homopolymerblock aus Monomeren der Gruppe umfassend Styrol und Methylmethacrylat ist.

30. Verfahren nach Anspruch 25 bis 29, **dadurch gekennzeichnet, daß** [A]ₐ und [A']_{a'} ein Co- oder ein Homopolymerblock aus Monomeren der Gruppe umfassend Acrylsäure, Methacrylsäure, Vinylsulfonsäure, 2-Acrylamido-2-Methylpropansulfonsäure sowie die Na^{⊕}-, K^{⊕}- und NH^{⊕}₄-Salze dieser Säuren ist.

31. Verfahren nach Anspruch 25 bis 29, **dadurch gekennzeichnet, daß** [A]ₐ und [A']_{a'} ein Co- oder ein Homopolymerblock aus Monomeren der Gruppe umfassend Acrylsäure, Methacrylsäure und deren K^{⊕}-, Na^{⊕}- und NH^{⊕}₄-Salze ist.

32. Verfahren nach Anspruch 25 bis 31, **dadurch gekennzeichnet, daß** b ≥ 35.

33. Verfahren nach Anspruch 25 bis 31, **dadurch gekennzeichnet, daß** b ≥ 40.

34. Verfahren nach Anspruch 25 bis 31, **dadurch gekennzeichnet, daß** b ≥ 45.

35. Verfahren nach Anspruch 25 bis 31, **dadurch gekennzeichnet, daß** b ≥ 50.

36. Verfahren nach Anspruch 25 bis 31, **dadurch gekennzeichnet, daß** a ≥ b.

37. Verfahren nach Anspruch 26 bis 31, **dadurch gekennzeichnet, daß** a', a" unabhängig voneinander ≥ b/2.

38. Verfahren nach Anspruch 1 bis 37, **dadurch gekennzeichnet, daß** das zu polymerisierende Monomerengemisch
- zu 70 bis 100 Gew.-% aus Estern der Acryl- und/oder Methacrylsäure mit 1 bis 12 C-Atome aufweisenden Alkanolen und/oder Styrol,
oder
- zu 70 bis 100 Gew.-% aus Vinylchlorid und/oder Vinylidenchlorid,
oder
- zu 70 bis 100 Gew.-% aus Styrol und/oder Butadien,
oder
- zu 40 bis 100 Gew.-% aus Vinylacetat, Vinylpropionat und/oder Ethylen
zusammengesetzt ist.

39. Verfahren nach Anspruch 1 bis 38, **dadurch gekennzeichnet, daß** die Polymerisation nach dem Zulaufverfahren erfolgt.

40. Verfahren nach Anspruch 1 bis 39, **dadurch gekennzeichnet, daß** die Gesamtmenge der zuzusetzenden amphiphilen Substanz ins Polymerisationsgefäß vorgelegt wird.

41. Verfahren nach Anspruch 1 bis 39, **dadurch gekennzeichnet, daß** wenigstens ein Teil der zuzusetzenden amphiphilen Substanz erst nach Beginn der Polymerisation zugesetzt wird.

42. Wäßrige Polymerisatdispersionen erhältlich nach einem Verfahren gemäß Anspruch 1 bis 41.

43. Tri-Blockpolymere der allgemeinen Formel II
[A]_{a'} [B]_{b} [A']_{a''} (II),
mit
[B]_{b} = ein Co- oder ein Homopolymerblock aus Monomeren der Gruppe umfassend Styrol, Methylstyrol, Chlorstyrol, Vinylester von C₁- bis C₈-Alkancarbonsäuren, Ester aus einer 3 bis 6 C-Atome aufweisenden α,β-monoethylenisch ungesättigten Carbonsäure und einem C₁- bis C₈-Alkanol, Butadien und Ethylen,
[A]_{a'} und [A']_{a''} = unabhängig voneinander ein Co- oder ein Homopolymerblock aus Monomeren der Gruppe umfassend 3 bis 6 C-Atome aufweisende α,β-monoethylenisch ungesättigte Mono- und Dicarbonsäuren, 2-Acrylamido-2-methylpropansulfonsäure, Styrolsulfonsäure. Vinylsulfonsäure sowie die Alkalimetall- und Ammoniumsalze der vorgenannten Säuren, N-Vinylpyrrolidon, Vinylalkohol, Ethylenglykol und Propylenglykol,
b = eine ganze Zahl, die die im Polymerblock [B]_{b} chemisch gebunden enthaltene Anzahl an Monomeren wiedergibt, wobei b ≥ 30 gilt und
a', a" = unabhängig voneinander eine ganze Zahl, die die im Polymerblock [A]ₐ' bzw. [A']_{a''} chemisch gebunden enthaltene Anzahl an Monomeren wiedergibt, wobei der Betrag von a' und a'' wenigstens jeweils 20 % des Betrages von b ist.

44. Tri-Blockpolymere nach Anspruch 43, wobei
[B]_{b} = ein Co- oder ein Homopolymerblock aus Monomeren der Gruppe umfassend Ester der Acryl- und Methacrylsäure mit C₁- bis C₈-Alkanolen und
[A]_{a'} und [A']_{a''} = unabhängig voneinander ein Co- oder ein Homopolymerblock aus Monomeren der Gruppe umfassend Acrylsäure, Methacrylsäure und die Alkalimetall- und Ammoniumsalze dieser Säuren.

45. Tri-Blockpolymere nach Anspruch 43 oder 44, wobei [A]_{a'}, [A]_{a''} und/oder [B]_{b} ein Homopolymerblock ist.

46. Tri-Blockpolymer nach Anspruch 43 bis 45, wobei [B]_{b} Polymethylmethacrylat ist.

47. Tri-Blockpolymer nach Anspruch 43 bis 46, wobei [A]_{a'} und [A]_{a''} unabhängig voneinander ein Homopolymerblock aus Acrylsäure, Methacrylsäure, K^{⊕}-Acrylat, K^{⊕}-Methacrylat, Na^{⊕}-Acrylat, Na^{⊕}-Methacrylat, Ammoniumacrylat oder Ammoniummethacrylat ist.

48. Tri-Blockpolymere nach Anspruch 43 bis 47, wobei a', a'' unabhängig voneinander wenigstens 40 % von b betragen.

49. Tri-Blockpolymere nach Anspruch 43 bis 48, erhältlich durch sequentielle anionische Polymerisation.

50. Di-Blockpolymere der allgemeinen Formel I oder I'
[A]ₐ [B]_{b} (I),
[B]_{b} [A]ₐ (I'),
mit
[B]_{b} = ein Co- oder ein Homopolymerblock aus Monomeren der Gruppe umfassend Styrol, Methylstyrol, Chlorstyrol, Vinylester von C₁- bis C₈-Alkancarbonsäuren, Ester aus einer 3 bis 6 C-Atome aufweisenden α,β-monoethylenisch ungesättigten Carbonsäure und einem C₁- bis C₈-Alkanol, Butadien und Ethylen,
[A]ₐ = ein Co- oder ein Homopolymerblock aus Monomeren der Gruppe umfassend 3 bis 6 C-Atome aufweisende α,β-monoethylenisch ungesättigte Mono- und Dicarbonsäuren, 2-Acrylamido-2-methylpropansulfonsäure, Styrolsulfonsäure, Vinylsulfonsäure sowie die Alkalimetall- und Ammoniumsalze der vorgenannten Säuren, N-Vinylpyrrolidon, Vinylalkohol, Ethylenglykol und Propylenglykol.
b = eine ganze Zahl, die die im Polymerblock [B]_{b} chemisch gebundene Anzahl an Monomeren wiedergibt, wobei b ≥ 30 gilt und
a = eine ganze Zahl, deren Betrag wenigstens 40 % des Betrages von b ist und die die im Polymerblock [A]ₐ chemisch gebundene Anzahl an Monomeren wiedergibt,
erhältlich durch sequentielle radikalische Polymerisation in Gegenwart von N-Oxyl-Radikalen.

51. Tri-Blockpolymere der allgemeinen Formel II
[A]ₐ, [B]_{b} [A']_{a"} (II),
mit
[B]_{b} = ein Co- oder ein Homopolymerblock aus Monomeren aus der Gruppe umfassend Styrol, Methylstyrol, Chlorstyrol, Vinylester von C₁- bis C₈-Alkancarbonsäuren, Ester aus einer 3 bis 6 C-Atome aufweisenden α,β-monoethylenisch ungesättigten Carbonsäure und einem C₁- bis C₈-Alkanol, Butadien und Ethylen,
[A]_{a'} und [A']_{a''}= unabhängig voneinander ein Co- oder ein Homopolymerblock aus Monomeren aus der Gruppe umfassend 3 bis 6 C-Atome aufweisende α,β-monoethylenisch ungesättigte Mono- und Dicarbonsäuren, 2-Acrylamido-2-methylpropansulfonsäure, Styrolsulfonsäure, Vinylsulfonsäure sowie die Alkalimetall- und Ammoniumsalze der vorgenannten Säuren, N-Vinylpyrroldion, Vinylalkohol, Ethylenglykol und Propylenglykol.
b = eine ganze Zahl, die die im Polymerblock [B]_{b} chemisch gebundene Anzahl an Monomeren wiedergibt, wobei b ≥ 30 gilt und
a', a" = unabhängig voneinander eine ganze Zahl, deren Betrag wenigstens 20 % des Betrages von b ist und die die im Polymerblock [A]_{a'} bzw. [A']_{a''} chemisch gebunden enthaltene Anzahl an Monomeren wiedergibt,
erhältlich durch sequentielle radikalische Polymerisation in Gegenwart von N-Oxyl-Radikalen.

52. Blockpolymere nach Anspruch 50 oder 51, wobei die B-Blockmonomeren aus der Gruppe umfassend Styrol, Methylmethacrylat, n-Butylacrylat und 2-Ethylhexylacrylat und die A- bzw. A'-Blockmonomeren aus der Gruppe umfassend Acrylsäure, Methacrylsäure, Styrolsulfonsäure, 2-Acrylamido-2-methylpropansulfonsäure sowie die Alkalimetall- und Ammomiumsalze der vorgenannten Säuren ausgewählt sind.

53. Verwendung von Blockpolymeren gemäß Anspruch 43, 50 oder 51 zur Herstellung einer wäßrigen Polymerisatdispersion.

54. Wäßrige Polymerisatdispersion, enthaltend wenigstens ein Blockpolymer gemäß einem der Ansprüche 43, 50 oder 51.

55. Verwendung von Di-Blockpolymeren gemäß Anspruch 50 der allgemeinen Formel I oder I'
[A]ₐ [B]_{b} (I),
[B]_{b} [A]ₐ (I'),
mit
[B]_{b} = ein Co- oder ein Homopolymerblock aus Monomeren der Gruppe umfassend Styrol, Methylstyrol, Chorstyrol, Vinylester von C₁- bis C₈-Alkancarbonsäuren, Ester aus einer 3 bis 6 C-Atome aufweisenden α,β-monoethylenisch ungesättigten Carbonsäure und einem C₁- bis C₈-Alkanol, Butadien und Ethylen,
[A]ₐ = ein Co- oder ein Homopolymerblock aus Monomeren der Gruppe umfassend 3 bis 6 C-Atome aufweisende α,β-monoethylenisch ungesättigte Mono- und Dicarbonsäuren, 2-Acrylamido-2-methylpropansulfonsäure, Styrolsulfonsäure, Vinylsulfonsäure, die Alkalimetall- und Ammoniumsalze der vorgenannten Säuren, N-Vinylpyrrolidon, Vinylalkohol, Ethylenglykol und Propylenglykol,
b = eine ganze Zahl, die die im Polymerblock [B]_{b} chemisch gebunden enthaltene Anzahl an Monomeren wiedergibt, wobei b > 30 gilt und
a = eine ganze Zahl, die die im Polymerblock [A]ₐ chemisch gebunden enthaltene Anzahl an Monomeren wiedergibt, wobei der Betrag von a wenigstens 40 % des Betrages von b ist zur Herstellung einer wässrigen Polymerisatdispersion,
zur Herstellung einer wässrigen Polymerisatdispersion nach der Methode der radikalisch wässrigen Emulsionspolymerisation.

56. Polymerisatpulver, erhältlich durch Trocknung einer wäßrigen Polymerisatdispersion gemäß Anspruch 54.

57. Polymerisatpulver, erhältlich durch Trocknung einer wäßrigen Polymerisatdispersion gemäß Anspruch 42.

## Claims

1. A process for the preparation of an aqueous polymer dispersion by polymerizing monomers having at least one vinyl group by the free radical aqueous emulsion polymerization method, in which an amphiphilic substance is added to the polymerization vessel before and/or during the polymerization, wherein
- 1 l of water at 20°C and 1 atm is capable of taking up at least 10⁻⁴ mol of the amphiphilic substance in micellar solution;
- the critical micelle formation concentration of the amphiphilic substance at 20°C and 1 atm in water is < 10⁻⁶ mol/l;
- the surface tension σ of an aqueous and/or micellar solution of the amphiphilic substance in the molar concentration range (0< C_{M} ≤ 10⁻⁴)mol/l at 20°C and 1 atm does not fall below 60 mN/m and
- the amphiphilic substance is a block polymer.

2. A process as claimed in claim 1, wherein the critical micelle formation concentration of the amphiphilic substance at 20°C and 1 atm in water is ≤ 10^{-6.25} mol/l.

3. A process as claimed in claim 1, wherein the critical micelle formation concentration of the amphiphilic substance at 20°C and 1 atm in water is ≤ 10^{-6.5} mol/l.

4. A process as claimed in claim 1, wherein the critical micelle formation concentration of the amphiphilic substance at 20°C and 1 atm in water is ≤ 10^{-6.75} mol/l.

5. A process as claimed in claim 1, wherein the critical micelle formation concentration of the amphiphilic substance at 20°C and 1 atm in water is ≤ 10⁻⁷ mol/l.

6. A process as claimed in claim 1, wherein the critical micelle formation concentration of the amphiphilic substance at 20°C and 1 atm in water is ≤ 10^{-7.25} mol/l.

7. A process as claimed in claim 1, wherein the critical micelle formation concentration of the amphiphilic substance at 20°C and 1 atm in water is ≤ 10^{-7.5} mol/l.

8. A process as claimed in any of claims 1 to 7, wherein the surface tension σ of an aqueous molecular or micellar solution of the amphiphilic substance in the molar concentration range (0 < C_{M} ≤ 10⁻⁴)mol/l at 20°C and 1 atm does not fall below 62.5 mN/m.

9. A process as claimed in any of claims 1 to 7, wherein the surface tension σ of an aqueous molecular or micellar solution of the amphiphilic substance in the molar concentration range (0 < C_{M} ≤ 10⁻⁴)mol/l at 20°C and 1 atm does not fall below 65 mN/m.

10. A process as claimed in any of claims 1 to 7, wherein the surface tension σ of an aqueous molecular or micellar solution of the amphiphilic substance in the molar concentration range (0 < C_{M} ≤ 10⁻⁴)mol/l at 20°C and 1 atm does not fall below 67.5 mN/m.

11. A process as claimed in any of claims 1 to 7, wherein the surface tension σ of an aqueous molecular or micellar solution of the amphiphilic substance in the molar concentration range (0 < C_{M} ≤ 10⁻⁴)mol/l at 20°C and 1 atm does not fall below 70 mN/m.

12. A process as claimed in any of claims 1 to 7, wherein the surface tension σ of an aqueous molecular or micellar solution of the amphiphilic substance in the molar concentration range (0 < C_{M} ≤ 10⁻⁴)mol/l at 20°C and 1 atm does not fall below 71.5 mN/m.

13. A process as claimed in any of claims 1 to 12, wherein 1 l of water at 20°C and 1 atm is capable of taking up at least 10⁻³ mol of the amphiphilic substance in micellar solution.

14. A process as claimed in any of claims 1 to 12, wherein 1 l of water at 20°C and 1 atm is capable of taking up at least 10⁻² mol of the amphiphilic substance in micellar solution.

15. A process as claimed in any of claims 1 to 12, wherein 1 l of water at 20°C and 1 atm is capable of taking up at least 10⁻¹ mol of the amphiphilic substance in micellar solution.

16. A process as claimed in any of claims 1 to 12, wherein 1 l of water at 20°C and 1 atm is capable of taking up at least 1 mole of the amphiphilic substance in micellar solution.

17. A process as claimed in any of claims 1 to 16, wherein the average residence time of a unimer within a micelle in a 10⁻⁵ molar micellar aqueous solution of the amphiphilic substance at 20°C and 1 atm is at least 15 min.

18. A process as claimed in any of claims 1 to 16, wherein the average residence time of a unimer within a micelle in a 10⁻⁵ molar micellar aqueous solution of the amphiphilic substance at 20°C and 1 atm is at least 30 min.

19. A process as claimed in any of claims 1 to 16, wherein the average residence time of a unimer within a micelle in a 10⁻⁵ molar micellar aqueous solution of the amphiphilic substance at 20°C and 1 atm is at least 1 hour.

20. A process as claimed in any of claims 1 to 16, wherein the average residence time of a unimer within a micelle in a 10⁻⁵ molar micellar aqueous solution of the amphiphilic substance at 20°C and 1 atm is at least 10 hours.

21. A process as claimed in any of claims 1 to 16, wherein the average residence time of a unimer within a micelle in a 10⁻⁵ molar micellar aqueous solution of the amphiphilic substance at 20°C and 1 atm is at least 20 hours.

22. A process as claimed in any of claims 1 to 21, wherein the amphiphilic substance is added as a preformed micellar solution.

23. A process as claimed in claim 22, wherein the amphiphilic substance is added as a preformed aqueous micellar solution.

24. A process as claimed in claim 23, wherein the preformed aqueous solution is a solution of frozen micelles.

25. A process as claimed in any of claims 1 to 24, wherein the block polymer is a two-block polymer of the formula I or I'
[A]ₐ [B]_{b} (I),
[B]_{b} [A]ₐ (I')
where
[B]_{b} is a copolymer block or a homopolymer block comprising monomers selected from the group consisting of styrene, methylstyrene, chlorostyrene, vinyl esters of C₁-C₈-alkanecarboxylic acids, esters of an α,β-monoethylenically unsaturated carboxylic acid of 3 to 6 carbon atoms and a C₁-C₈-alkanol, butadiene and ethylene,
[A]ₐ is a copolymer block or a homopolymer block comprising monomers selected from the group consisting of α,β-monoethylenically unsaturated mono- and dicarboxylic acids of 3 to 6 carbon atoms, 2-acrylamido-2-methylpropanesulfonic acid, styrenesulfonic acid, vinylsulfonic acid and the alkali metal and ammonium salts of the abovementioned acids, N-vinylpyrrolidone, vinyl alcohol, ethylene glycol and propylene glycol,
b is an integer which indicates the number of monomers contained in chemically bonded form in the polymer block [B]_{b}, b being ≥ 30, and
a is an integer whose magnitude is at least 40 %, preferably at least 75 %, of the magnitude of b and which indicates the number of monomers contained in chemically bonded form in the polymer block [A]ₐ.

26. A process as claimed in any of claims 1 to 24, wherein the block polymer is a three-block polymer of the formula II
[A]ₐ, [B]_{b} [A']_{a"} (II),
where
[B]_{b} is a copolymer block or a homopolymer block comprising monomers selected from the group consisting of styrene, methylstyrene, chlorostyrene, vinyl esters of C₁-C₈-alkanecarboxylic acids, esters of an α,β-monoethylenically unsaturated carboxylic acid of 3 to 6 carbon atoms and a C₁-C₈-alkanol, butadiene and ethylene,
[A]_{a'} and [A']_{a''}, independently of one another, are each a copolymer block or a homopolymer block comprising monomers selected from the group consisting of α,β-monoethylenically unsaturated mono- and dicarboxylic acids of 3 to 6 carbon atoms, 2-acrylamido-2-methylpropanesulfonic acid, styrenesulfonic acid, vinylsulfonic acid and the alkali metal and ammonium salts of the abovementioned acids, N-vinylpyrrolidone, vinyl alcohol, ethylene glycol and propylene glycol,
b is an integer which indicates the number of monomers contained in chemically bonded form in the polymer block [B]_{b}, b being ≥ 30, and
a' and a", independently of one another, are each an integer whose magnitude is less than 20 %, preferably less than 40 %, of the magnitude of b and which indicate the number of monomers contained in chemically bonded form in the polymer block [A]_{a'} and [A]_{a"}, respectively.

27. A process as claimed in claim 25 or 26, wherein [B]_{b} is a copolymer block or a homopolymer block comprising monomers selected from the group consisting of styrene, methylstyrene, chlorostyrene, vinyl acetate, vinyl propionate, methyl acrylate, ethyl acrylate, n-butyl acrylate, 2-ethylhexyl acrylate and methyl methacrylate.

28. A process as claimed in claim 25 or 26, wherein [B]_{b} is a copolymer block or a homopolymer block comprising monomers selected from the group consisting of styrene, methyl methacrylate, n-butyl acrylate and 2-ethylhexyl acrylate.

29. A process as claimed in claim 25 or 26, wherein [B]_{b} is a copolymer block or a homopolymer block comprising monomers selected from the group consisting of styrene and methyl methacrylate.

30. A process as claimed in any of claims 25 to 29, wherein [A]ₐ and [A']ₐ, are each a copolymer block or a homopolymer block comprising monomers selected from the group consisting of acrylic acid, methacrylic acid, vinylsulfonic acid, 2-acrylamido-2-methylpropanesulfonic acid and the Na^{⊕}, K^{⊕} and NH^{⊕}₄salts of these acids.

31. A process as claimed in any of claims 25 to 29, wherein [A]ₐ and [A']_{a'} are each a copolymer block or a homopolymer block comprising monomers selected from the group consisting of acrylic acid, methacrylic acid and the K^{⊕}, Na^{⊕} and NH^{⊕}₄salts thereof.

32. A process as claimed in any of claims 25 to 31, wherein b is ≥ 35.

33. A process as claimed in any of claims 25 to 31, wherein b is ≥ 40.

34. A process as claimed in any of claims 25 to 31, wherein b is ≥ 45.

35. A process as claimed in any of claims 25 to 31, wherein b is ≥ 50.

36. A process as claimed in any of claims 25 to 31, wherein a is ≥ b.

37. A process as claimed in any of claims 26 to 31, wherein a' and a", independently of one another, are each ≥ b/2.

38. A process as claimed in any of claims 1 to 37, wherein the monomer mixture to be polymerized is composed of
- from 70 to 100 % by weight of esters of acrylic and/or methacrylic acid with alkanols of 1 to 12 carbon atoms and/or styrene,
or
- from 70 to 100 % by weight of vinyl chloride and/or vinylidene chloride,
or
- from 70 to 100 % by weight of styrene and/or butadiene,
or
- from 40 to 100 % by weight of vinyl acetate, vinyl propionate and/or ethylene.

39. A process as claimed in any of claims 1 to 38, wherein the polymerization is carried out by the feed method.

40. A process as claimed in any of claims 1 to 39, wherein the total amount of the amphiphilic substance to be added is initially taken in the polymerization vessel.

41. A process as claimed in any of claims 1 to 39, wherein at least some of the amphiphilic substance to be added is not added until after the beginning of the polymerization.

42. An aqueous polymer dispersion obtainable by a process as claimed in any of claims 1 to 41.

43. A three-block polymer of the formula II
[A]_{a'} [B]_{b} [A']_{a''} (II),
where
[B]_{b} is a copolymer block or a homopolymer block comprising monomers selected from the group consisting of styrene, methylstyrene, chlorostyrene, vinyl esters of C₁-C8-alkanecarboxylic acids, esters of an α,β-monoethylenically unsaturated carboxylic acid of 3 to 6 carbon atoms and a C₁- C₈-alkanol, butadiene and ethylene,
[A]_{a'} and [A']_{a''} independently of one another, are each a copolymer block or a homopolymer block comprising monomers selected from the group consisting of α,β-monoethylenically unsaturated mono- and dicarboxylic acids of 3 to 6 carbon atoms, 2-acrylamido-2-methylpropanesulfonic acid, styrenesulfonic acid, vinylsulfonic acid and the alkali metal and ammonium salts of the abovementioned acids, N-vinylpyrrolidone, vinyl alcohol, ethylene glycol and propylene glycol,
b is an integer which indicates the number of monomers contained in chemically bonded form in the polymer block [B]_{b}, b being ≥ 30, and
a', a", independently of one another, are each an integer which indicates the number of monomers contained in chemically bonded form in the polymer block [A]_{a'} and [A']_{a''}, respectively, the magnitude of a' and a'' each being at least 20 % of the magnitude of b.

44. A three-block polymer as claimed in claim 43, wherein
[B]_{b} is a copolymer block or a homopolymer block comprising monomers selected from the group consisting of esters of acrylic and methacrylic acid with C₁- C₈-alkanols and
[A]_{a'} and [A']_{a''}, independently of one another, are each a copolymer block or a homopolymer block comprising monomers selected from the group consisting of acrylic acid, methacrylic acid and the alkali metal and ammonium salts of these acids.

45. A three-block polymer as claimed in claim 43 or 44, wherein [A]_{a'}, [A]_{a''} and/or [B]_{b} is a homopolymer block.

46. A three-block polymer as claimed in any of claims 43 to 45, wherein [B]_{b} is polymethyl methacrylate.

47. A three-block polymer as claimed in any of claims 43 to 46, wherein [A]_{a'} and [A]_{a''}, independently of one another, are each a homopolymer block comprising acrylic acid, methacrylic acid, potassium acrylate, potasssium methacrylate, sodium acrylate, sodium methacrylate, ammonium acrylate or ammonium methacrylate.

48. A three-block polymer as claimed in any of claims 43 to 47, wherein a' and a'', independently of one another, are each at least 40 % of b.

49. A three-block polymer as claimed in any of claims 43 to 48, obtainable by sequential anionic polymerization.

50. A two-block polymer of the formula I or I' where
[B]_{b} is a copolymer block or a homopolymer block comprising monomers selected from the group consisting of styrene, methylstyrene, chlorostyrene, vinyl esters of C₁-C₈-alkanecarboxylic acids, esters of an α,β-monoethylenically unsaturated carboxylic acid of 3 to 6 carbon atoms and a C₁-C₈-alkanol, butadiene and ethylene,
[A]ₐ is a copolymer block or a homopolymer block comprising monomers selected from the group consisting of α,β-monoethylenically unsaturated mono- and dicarboxylic acids of 3 to 6 carbon atoms, 2-acrylamido-2-methylpropanesulfonic acid, styrenesulfonic acid, vinylsulfonic acid and the alkali metal and ammonium salts of the abovementioned acids, N-vinylpyrrolidone, vinyl alcohol, ethylene glycol and propylene glycol,
b is an integer which indicates the number of monomers contained in chemically bonded form in the polymer block [B]_{b}, b being ≥ 30, and
a is an integer whose magnitude is at least 40 % of the magnitude of b and which indicates the number of monomers contained in chemically bonded form in the polymer block [A]ₐ,
obtainable by sequential free radical polymerization in the presence of N-oxyl free radicals.

51. A three-block polymer of the formula II
[A]ₐ, [B]_{b} [A']_{a"} (II),
where
[B]_{b} is a copolymer block or a homopolymer block comprising monomers selected from the group consisting of styrene, methylstyrene, chlorostyrene, vinyl esters of C₁-C₈-alkanecarboxylic acids, esters of an α,β-monoethylenically unsaturated carboxylic acid of 3 to 6 carbon atoms and a C₁-C₈-alkanol, butadiene and ethylene,
[A]_{a'} and [A']_{a''}, independently of one another, are each a copolymer block or a homopolymer block comprising monomers selected from the group consisting of α,β-monoethylenically unsaturated mono- and dicarboxylic acids of 3 to 6 carbon atoms, 2-acrylamido-2-methylpropanesulfonic acid, styrenesulfonic acid, vinylsulfonic acid and the alkali metal and ammonium salts of the abovementioned acids, N-vinylpyrrolidone, vinyl alcohol, ethylene glycol and propylene glycol,
b is an integer which indicates the number of monomers contained in chemically bonded form in the polymer block [B]_{b}, b being ≥ 30, and
a' and a", independently of one another are each an integer whose magnitude is less than 20 % of the magnitude of b and which indicate the number of monomers contained in chemically bonded form in the polymer block [A]_{a'} and [A]_{a"}, respectively,
obtainable by sequential free radical polymerization in the presence of N-oxyl free radicals.

52. A block polymer as claimed in claim 50 or 51, wherein the B block monomers are selected from the group consisting of styrene, methyl methacrylate, n-butyl acrylate and 2-ethylhexyl acrylate and the A and A' block monomers are selected from the group consisting of acrylic acid, methacrylic acid, styrenesulfonic acid, 2-acrylamido-2-methylpropanesulfonic acid and the alkali metal and ammonium salts of the abovementioned acids.

53. Use of a block polymer as claimed in claim 43, 50 or 51 for the preparation of an aqueous polymer dispersion.

54. An aqueous polymer dispersion containing at least one block polymer as claimed in claim 43, 50 or 51.

55. The use of a two-block polymer as claimed in claim 50 of the formula I or I'
[A]ₐ [B]_{b} (I),
[B]_{b} [A]ₐ (I'),
where
[B]_{b} is a copolymer block or a homopolymer block comprising monomers selected from the group consisting of styrene, methylstyrene, chlorostyrene, vinyl esters of C₁- C₈-alkanecarboxylic acids, esters of an α,β-monoethylenically unsaturated carboxylic acid of 3 to 6 carbon atoms and a C₁- C₈-alkanol, butadiene and ethylene,
[A]ₐ is a copolymer block or a homopolymer block comprising monomers selected from the group consisting of α,β-monoethylenically unsaturated mono- and dicarboxylic acids of 3 to 6 carbon atoms, 2-acrylamido-2-methylpropanesulfonic acid, styrenesulfonic acid, vinylsulfonic acid, the alkali metal and ammonium salts of the abovementioned acids, N-vinylpyrrolidone, vinyl alcohol, ethylene glycol and propylene glycol,
b is an integer which indicates the number of monomers contained in chemically bonded form in the polymer block [B]_{b}, b being > 30, and
a is an integer which indicates the number of monomers contained in chemically bonded form in the polymer block [A]ₐ, the magnitude of a being at least 40 % of the magnitude of b,
for the preparation of an aqueous polymer dispersion by the free radical aqueous emulsion polymerization method.

56. A polymer powder obtainble by drying an aqueous polymer dispersion as claimed in claim 54.

57. A polymer powder obtainable by drying an aqueous polymer dispersion as claimed in claim 42.

## Revendications

1. Procédé pour préparer une dispersion aqueuse de polymère au moyen d'une polymérisation de monomères présentant au moins un groupe vinylique selon un procédé de polymérisation radicalaire en émulsion aqueuse, dans lequel on ajoute, avant et/ou pendant la polymérisation, une substance amphiphile dans la cuve de polymérisation, **caractérisé en ce que**,
- 1 L d'eau à 20°C et sous une pression de 101 kPa (1 atm) peut absorber au moins 10⁻⁴ mole de la substance amphiphile en solution micellaire ;
- la concentration de formation de micelles de la substance amphiphile à 20°C et sous une pression de 101 kPa (1 atm) dans l'eau est inférieure à 10⁻⁶ mole/L ;
- la tension superficielle σ d'une solution aqueuse et/ou micellaire de la substance amphiphile dans le domaine de la concentration molaire (0 < C_{M} ≤ 10⁻⁴) mole/L à 20°C et sous une pression de 101 kPa (1 atm) ne dépasse pas la valeur de 60 mN/m et
- la substance amphiphile est un polymère séquencé.

2. Procédé selon la revendication 1, **caractérisé en ce que** la concentration critique de formation de micelles de la substance amphiphile à 20°C et sous une pression de 101 kPa (1 atm) dans l'eau est inférieure ou égale à 10^{-6,25} mole/L.

3. Procédé selon la revendication 1, **caractérisé en ce que** la concentration critique de formation de micelles de la substance amphiphile à 20°C et sous une pression de 101 kPa (1 atm) dans l'eau est inférieure ou égale à 10^{-6,5} mole/L.

4. Procédé selon la revendication 1, **caractérisé en ce que** la concentration critique de formation de micelles de la substance amphiphile à 20°C et sous une pression de 101 kPa (1 atm) dans l'eau est inférieure ou égale à 10^{-6,75} mole/L.

5. Procédé selon la revendication 1, **caractérisé en ce que** la concentration critique de formation de micelles de la substance amphiphile à 20°C et sous une pression de 101 kPa (1 atm) dans l'eau est inférieure ou égale à 10⁻⁷ mole/L.

6. Procédé selon la revendication 1, **caractérisé en ce que** la concentration critique de formation de micelles de la substance amphiphile à 20°C et sous une pression de 101 kPa (1 atm) dans l'eau est inférieure ou égale à 10^{-7,25} mole/L.

7. Procédé selon la revendication 1, **caractérisé en ce que** la concentration critique de formation de micelles de la substance amphiphile à 20°C et sous une pression de 101 kPa (1 atm) dans l'eau est inférieure ou égale à 10^{-7,5} mole/L.

8. Procédé selon les revendications 1 à 7, **caractérisé en ce que** la tension superficielle σ d'une solution aqueuse moléculaire et/ou micellaire de la substance amphiphile dans le domaine de la concentration molaire (0 < C_{M} ≤ 10⁻⁴) mole/L à 20°C et sous une pression de 101 kPa (1 atm) ne dépasse pas la valeur de 62,5 mN/m.

9. Procédé selon les revendications 1 à 7, **caractérisé en ce que** la tension superficielle d'une solution aqueuse moléculaire et/ou micellaire de la substance amphiphile dans le domaine de la concentration molaire (0 < C_{M} ≤ 10⁻⁴) mole/L à 20°C et sous une pression de 101 kPa (1 atm) ne dépasse pas la valeur de 65 mN/m.

10. Procédé selon les revendications 1 à 7, **caractérisé en ce que** la tension superficielle d'une solution aqueuse moléculaire et/ou micellaire de la substance amphiphile dans le domaine de la concentration molaire (0 < C_{M} ≤ 10⁻⁴) mole/L à 20°C et sous une pression de 101 kPa (1 atm) ne dépasse pas la valeur de 67,5 mN/m.

11. Procédé selon les revendications 1 à 7, **caractérisé en ce que** la tension superficielle d'une solution aqueuse moléculaire et/ou micellaire de la substance amphiphile dans le domaine de la concentration molaire (0 < C_{M} ≤ 10⁻⁴) mole/L à 20°C et sous une pression de 101 kPa (1 atm) ne dépasse pas la valeur de 70 mN/m.

12. Procédé selon les revendications 1 à 7, **caractérisé en ce que** la tension superficielle σ d'une solution aqueuse moléculaire et/ou micellaire de la substance amphiphile dans le domaine de la concentration molaire (0 < C_{M} ≤ 10⁻⁴) mole/L à 20°C et sous une pression de 101 kPa (1 atm) ne dépasse pas la valeur de 71,5 mN/m.

13. Procédé selon les revendications 1 à 12, **caractérisé en ce que** 1 L d'eau à 20°C et sous une pression de 101 kPa (1 atm) peut absorber au moins 10⁻³ mole de la substance amphiphile en solution micellaire.

14. Procédé selon les revendications 1 à 12, **caractérisé en ce que** 1 L d'eau à 20°C et sous une pression de 101 kPa (1 atm) peut absorber au moins 10⁻² mole de la substance amphiphile en solution micellaire.

15. Procédé selon les revendications 1 à 12, **caractérisé en ce que** 1 L d'eau à 20°C et sous une pression de 101 kPa (1 atm) peut absorber au moins 10⁻¹ mole de la substance amphiphile en solution micellaire.

16. Procédé selon les revendications 1 à 12, **caractérisé en ce que** 1 L d'eau à 20°C et sous une pression de 101 kPa (1 atm) peut absorber au moins 1 mole de la substance amphiphile en solution micellaire.

17. Procédé selon les revendications 1 à 16, **caractérisé en ce que** le temps de séjour moyen d'un monomère à l'intérieur d'une micelle dans une solution aqueuse micellaire à 10⁻⁵ mole de la substance amphiphile à 20°C et sous une pression de 101 kPa (1 atm) est d'au moins 15 min.

18. Procédé selon les revendications 1 à 16, **caractérisé en ce que** le temps de séjour moyen d'un monomère à l'intérieur d'une micelle dans une solution aqueuse micellaire à 10⁻⁵ mole de la substance amphiphile à 20°C et sous une pression de 101 kPa (1 atm) est d'au moins 30 h.

19. Procédé selon les revendications 1 à 16, **caractérisé en ce que** le temps de séjour moyen d'un monomère à l'intérieur d'une micelle dans une solution aqueuse micellaire à 10⁻⁵ mole de la substance amphiphile à 20°C et sous une pression de 101 kPa (1 atm) est d'au moins 1 h.

20. Procédé selon les revendications 1 à 16, **caractérisé en ce que** le temps de séjour moyen d'un monomère à l'intérieur d'une micelle dans une solution aqueuse micellaire à 10⁻⁵ mole de la substance amphiphile à 20°C et sous une pression de 101 kPa (1 atm) est d'au moins 10 h.

21. Procédé selon les revendications 1 à 16, **caractérisé en ce que** le temps de séjour moyen d'un monomère à l'intérieur d'une micelle dans une solution aqueuse micellaire à 10⁻⁵ mole de la substance amphiphile à 20°C et sous une pression de 101 kPa (1 atm) est d'au moins 20 h.

22. Procédé selon les revendications 1 à 21, **caractérisé en ce que** l'on ajoute la substance amphiphile sous forme de solution micellaire préformée.

23. Procédé selon la revendication 22, **caractérisé en ce que** l'on ajoute la substance amphiphile sous forme de solution micellaire aqueuse préformée.

24. Procédé selon la revendication 23, **caractérisé en ce que** la solution aqueuse préformée est une solution à micelles gelées.

25. Procédé selon les revendications 1 à 24, **caractérisé en ce que** le polymère séquencé est un polymère biséquencé de formule générale I ou I'
[A]ₐ [B]_{b} (I),
[B]_{b} [A]ₐ (I')
[B]_{b} étant une séquence copolymère ou homopolymère formée à partir de monomères du groupe formé par le styrène, le méthylstyrène, le chlorostyrène, l'ester vinylique d'acides (alcane en C₁ à C₈)carboxyliques, l'ester d'un acide carboxylique monoéthyléniquement insaturé en α,β ayant de 3 à 6 atomes de C et d'un alcanol en C₁ à C₈, le butadiène et l'éthylène,
[A]ₐ étant une séquence copolymère ou homopolymère formée à partir de monomères du groupe formé par des acides mono- ou dicarboxyliques monoéthyléniquement insaturés en α,β ayant de 3 à 6 atomes de C, l'acide 2-acrylamido-2-méthylpropanesulfonique, l'acide styrènesulfonique, l'acide vinylsulfonique ainsi que les sels de métaux alcalins et les sels d'ammonium des acides susmentionnés, la N-vinylpyrrolidone, l'alcool vinylique, l'éthylèneglycol et le propylèneglycol,
b étant un nombre entier qui représente la quantité de monomères chimiquement liés contenus dans la séquence polymère [B]_{b}, b étant supérieur ou égal à 30 et
a étant un nombre entier, dont la valeur correspond à au moins 40%, de préférence au moins 75% de la valeur de b, et qui représente la quantité de monomères chimiquement liés contenus dans la séquence polymère [A]ₐ.

26. Procédé selon les revendications 1 à 24, **caractérisé en ce que** le polymère séquencé est un polymère triséquencé de formule générale II
[A]ₐ, [B]_{b} [A']_{a''} (II),
[B]_{b} étant une séquence copolymère ou homopolymère formée à partir de monomères du groupe formé par le styrène, le méthylstyrène, le chlorostyrène, l'ester vinylique d'acides (alcane en C₁ à C₈)carboxyliques, l'ester vinylique d'un acide carboxylique monoéthyléniquement insaturé enα,β ayant de 3 à 6 atomes de C et d'un alcanol en C₁ à C₈, le butadiène et l'éthylène,
[A]ₐ et [A']_{a''} étant, indépendamment l'une de l'autre, une séquence copolymère ou homopolymère formée à partir de monomères du groupe formé par des acides mono- ou dicarboxyliques monoéthyléniquement insaturés en α,β ayant de 3 à 6 atomes de C, l'acide 2-acrylamido-2-méthylpropanesulfonique, l'acide styrènesulfonique, l'acide vinylsulfonique ainsi que les sels de métaux alcalins et les sels d'ammonium des acides susmentionnés, la N-vinylpyrrolidone, l'alcool vinylique, l'éthylèneglycol et le propylèneglycol,
b étant un nombre entier qui représente la quantité de monomères chimiquement liés contenus dans la séquence polymère [B]_{b}, b étant supérieur ou égal à 30 et
a', a'' étant indépendamment l'un de l'autre un nombre entier, dont la valeur correspond à au moins 20%, de préférence au moins 40% de la valeur de b, et qui représente la quantité de monomères chimiquement liés contenus dans la séquence polymère [A]_{a'} ou [A']_{a''}.

27. Procédé selon la revendication 25 ou 26, **caractérisé en ce que** [B]_{b} est une séquence copolymère ou homopolymère formée à partir de monomères du groupe formé par le styrène, le méthylstyrène, le chlorostyrène, l'acétate de vinyle, le propionate de vinyle, l'acrylate de méthyle, l'acrylate d'éthyle, l'acrylate de n-butyle, l'acrylate de 2-éthylhexyle et le méthacrylate de méthyle.

28. Procédé selon la revendication 25 ou 26, **caractérisé en ce que** [B]_{b} est une séquence copolymère ou homopolymère formée à partir de monomères du groupe formé par le styrène, le méthacrylate de méthyle, l'acrylate de n-butyle et l'acrylate de 2-éthylhexyle.

29. Procédé selon la revendication 25 ou 26, **caractérisé en ce que** [B]_{b} est une séquence copolymère ou homopolymère formée à partir de monomères du groupe formé par le styrène et le méthacrylate de méthyle.

30. Procédé selon les revendications 25 à 29, **caractérisé en ce que** [A]_{a'} et [A']_{a''} sont une séquence copolymère ou homopolymère formée à partir de monomères du groupe formé par l'acide acrylique, l'acide méthacrylique, l'acide vinylsulfonique, l'acide 2-acrylamido-2-méthylpropanesulfonique ainsi que les sels de Na⁺, K⁺ et NH₄⁺ de ces acides.

31. Procédé selon les revendications 25 à 29, **caractérisé en ce que** [A]_{a'} et [A']_{a''} sont une séquence copolymère ou homopolymère formée à partir de monomères du groupe formé par l'acide acrylique, l'acide méthacrylique et leurs sels de Na⁺, K⁺ et NH₄⁺.

32. Procédé selon les revendications 25 à 31, **caractérisé en ce que** b est supérieur ou égal à 35.

33. Procédé selon les revendications 25 à 31, **caractérisé en ce que** b est supérieur ou égal à 40.

34. Procédé selon les revendications 25 à 31, **caractérisé en ce que** b est supérieur ou égal à 45.

35. Procédé selon les revendications 25 à 31, **caractérisé en ce que** b est supérieur ou égal à 50.

36. Procédé selon les revendications 25 à 31, **caractérisé en ce que** a est supérieur ou égal à b.

37. Procédé selon les revendications 26 à 31, **caractérisé en ce que** a', a'' sont, indépendamment l'un de l'autre, supérieurs ou égaux à b/2.

38. Procédé selon les revendications 1 à 37, **caractérisé en ce que** le mélange de monomères à polymériser est composé
- de 70% à 100% en poids d'esters de l'acide acrylique et/ou méthacrylique contenant des alcanols ayant de 1 à 12 atomes de C et/ou du styrène,
ou
- de 70% à 100% en poids de chlorure de vinyle et/ou de chlorure de vinylidène,
ou
- de 70% à 100% en poids de styrène et/ou de butadiène,
ou
- de 40% à 100% en poids d'acétate de vinyle, de propionate de vinyle et/ou d'éthylène.

39. Procédé selon les revendications 1 à 38, **caractérisé en ce que** la polymérisation se déroule selon un procédé à alimentation continue.

40. Procédé selon les revendications 1 à 39, **caractérisé en ce que** l'on introduit dans la cuve de polymérisation la quantité totale de la substance amphiphile à ajouter.

41. Procédé selon les revendications 1 à 39, **caractérisé en ce que** l'on n'ajoute au moins une partie de la substance amphiphile à ajouter qu'après le début de la polymérisation.

42. Dispersion aqueuse de polymère pouvant être obtenue au moyen d'un procédé selon les revendications 1 à 41.

43. Polymères triséquencés de formule générale II
[A]ₐ, [B]_{b} [A']_{a''} (II),
[B]_{b} étant une séquence copolymère ou homopolymère formée à partir de monomères du groupe formé par le styrène, le méthylstyrène, le chlorostyrène, l'ester vinylique d'acides (alcane en C₁ à C₈)carboxyliques, l'ester d'un acide carboxylique monoéthyléniquement insaturé en α,β ayant de 3 à 6 atomes de C et d'un alcanol en C₁ à C₈, le butadiène et l'éthylène,
[A]ₐ et [A']_{a''} étant, indépendamment l'une de l'autre, une séquence copolymère ou homopolymère formée à partir de monomères du groupe formé par des acides mono- ou dicarboxyliques monoéthyléniquement insaturés en α,β ayant de 3 à 6 atomes de C, l'acide 2-acrylamido-2-méthylpropanesulfonique, l'acide styrènesulfonique, l'acide vinylsulfonique ainsi que les sels de métaux alcalins et les sels d'ammonium des acides susmentionnés, la N-vinylpyrrolidone, l'alcool vinylique, l'éthylèneglycol et le propylèneglycol,
b étant un nombre entier qui représente la quantité de monomères chimiquement liés contenus dans la séquence polymère [B]_{b}, b étant supérieur ou égal à 30 et
a', a'' étant, indépendamment l'un de l'autre, un nombre entier représentant la quantité de monomères chimiquement liés contenus dans la séquence polymère [A]_{a'} ou [A']_{a''}, la valeur de a' et a'' représentant à chaque fois au moins 20% de la valeur de b.

44. Polymères triséquencés selon la revendication 43, dans lesquels
[B]_{b} est une séquence copolymère ou homopolymère formée à partir de monomères du groupe formé par les esters de l'acide acrylique et méthacrylique avec des alcanols en C₁ à C₈ et
[A]ₐ et [A']_{a''} sont, indépendamment l'une de l'autre, une séquence copolymère ou homopolymère formée à partir de monomères du groupe formé par l'acide acrylique, l'acide méthacrylique et les sels de métaux alcalins et d'ammonium de ces acides.

45. Polymères triséquencés selon la revendication 43 ou 44, dans lesquels [A]ₐ et [A']_{a''} et/ou [B]_{b} sont une séquence homopolymère.

46. Polymère triséquencé selon les revendications 43 à 45, dans lequel [B]_{b} est le poly(méthacrylate de méthyle).

47. Polymère triséquencé selon les revendications 43 à 46, dans lequel [A]ₐ et [A']_{a''} sont, indépendamment l'une de l'autre, une séquence homopolymère formée à partir de l'acide acrylique, l'acide méthacrylique, l'acrylate de K⁺, le méthacrylate de K⁺, l'acrylate de Na⁺, le méthacrylate de Na⁺, l'acrylate d'ammonium ou le méthacrylate d'ammonium.

48. Polymères triséquencés selon les revendications 43 à 47, dans lesquels a', a'' correspondent, indépendamment l'un de l'autre, à au moins 40% de b.

49. Polymères triséquencés selon les revendications 43 à 48, pouvant être obtenus par polymérisation anionique séquentielle.

50. Polymères biséquencés de formule générale I ou I'
[A]ₐ [B]_{b} (I),
[B]_{b} [A]ₐ (I')
[B]_{b} étant une séquence copolymère ou homopolymère formée à partir de monomères du groupe formé par le styrène, le méthylstyrène, le chlorostyrène, l'ester vinylique d'acides (alcane en C₁ à C₈)carboxyliques, l'ester d'un acide carboxylique monoéthyléniquement insaturé en α,β ayant de 3 à 6 atomes de C et d'un alcanol en C₁ à C₈, le butadiène et l'éthylène,
[A]ₐ étant une séquence copolymère ou homopolymère formée à partir de monomères du groupe formé par des acides mono- ou dicarboxyliques monoéthyléniquement insaturés en α,β ayant de 3 à 6 atomes de C, l'acide 2-acrylamido-2-méthylpropanesulfonique, l'acide styrènesulfonique, l'acide vinylsulfonique ainsi que les sels de métaux alcalins et les sels d'ammonium des acides susmentionnés, la N-vinylpyrrolidone, l'alcool vinylique, l'éthylèneglycol et le propylèneglycol,
b étant un nombre entier qui représente la quantité de monomères chimiquement liés contenus dans la séquence polymère [B]_{b}, b étant supérieur ou égal à 30 et
a étant un nombre entier, dont la valeur correspond à au moins 40% de la valeur de b, et qui représente la quantité de monomères chimiquement liés contenus dans la séquence polymère [A]ₐ,
pouvant être obtenus par polymérisation radicalaire séquentielle en présence de radicaux N-oxyle.

51. Polymères triséquencés de formule générale II,
[A]ₐ, [B]_{b} [A']_{a''} (II),
[B]_{b} étant une séquence copolymère ou homopolymère formée à partir de monomères du groupe formé par le styrène, le méthylstyrène, le chlorostyrène, l'ester vinylique d'acides (alcane en C₁ à C₈)carboxyliques, l'ester d'un acide carboxylique monoéthyléniquement insaturé en α,β ayant de 3 à 6 atomes de C et d'un alcanol en C₁ à C₈, le butadiène et l'éthylène,
[A]ₐ et [A']_{a''} étant, indépendamment l'une de l'autre, une séquence copolymère ou homopolymère formée à partir de monomères du groupe formé par des acides mono- ou dicarboxyliques monoéthyléniquement insaturés en α,β ayant de 3 à 6 atomes de C, l'acide 2-acrylamido-2-méthylpropanesulfonique, l'acide styrènesulfonique, l'acide vinylsulfonique ainsi que les sels de métaux alcalins et les sels d'ammonium des acides susmentionnés, la N-vinylpyrrolidone, l'alcool vinylique, l'éthylèneglycol et le propylèneglycol,
b étant un nombre entier qui représente la quantité de monomères chimiquement liés contenus dans la séquence polymère [B]_{b}, b étant supérieur ou égal à 30 et
a', a'' étant un nombre entier, dont la valeur correspond à au moins 20% et qui représente la quantité de monomères chimiquement liés contenus dans la séquence polymère [A]_{a'} ou [A']_{a''},
pouvant être obtenus par polymérisation radicalaire séquentielle en présence de radicaux N-oxyle.

52. Polymères séquencés selon la revendication 50 ou 51, dans lesquels on choisit les monomères de la séquence B dans le groupe formé par le styrène, le méthacrylate de méthyle, l'acrylate de n-butyle et l'acrylate de 2-éthylhexyle, et les monomères de la séquence A ou A' dans le groupe formé par l'acide acrylique, l'acide méthacrylique, l'acide styrènesulfonique, l'acide 2-acrylamido-2-méthylpropanesulfonique ainsi que les sels des métaux alcalins et d'ammonium des acides susmentionnés.

53. Utilisation de polymères séquencés selon la revendication 43, 50 ou 51 pour préparer une dispersion aqueuse de polymère.

54. Dispersion aqueuse de polymère contenant au moins un polymère séquencé selon l'une quelconque des revendications 43, 50 ou 51.

55. Utilisation de polymères biséquencés, selon la revendication 50, de formule générale I ou I'
[A]ₐ [B]_{b} (I),
[B]_{b} [A]ₐ (I')
[B]_{b} étant une séquence copolymère ou homopolymère formée à partir de monomères du groupe formé par le styrène, le méthylstyrène, le chlorostyrène, l'ester vinylique d'acides (alcane en C₁ à C₈)carboxyliques, l'ester d'un acide carboxylique monoéthyléniquement insaturé en α,β ayant de 3 à 6 atomes de C et d'un alcanol en C₁ à C₈, le butadiène et l'éthylène,
[A]ₐ étant une séquence copolymère ou homopolymère formée à partir de monomères du groupe formé par des acides mono- ou dicarboxyliques monoéthyléniquement insaturés en α,β ayant de 3 à 6 atomes de C, l'acide 2-acrylamido-2-méthylpropanesulfonique, l'acide styrènesulfonique, l'acide vinylsulfonique ainsi que les sels de métaux alcalins et les sels d'ammonium des acides susmentionnés, la N-vinylpyrrolidone, l'alcool vinylique, l'éthylèneglycol et le propylèneglycol,
b étant un nombre entier qui représente la quantité de monomères chimiquement liés contenus dans la séquence polymère [B]_{b}, b étant supérieur ou égal à 30 et
a étant un nombre entier, qui représente la quantité de monomères chimiquement liés contenus dans la séquence polymère [A]ₐ et dont la valeur correspond à au moins 40% de la valeur de b, pour la préparation d'une dispersion aqueuse de polymère,
pour la préparation d'une dispersion aqueuse de polymère selon le procédé de la polymérisation radicalaire en émulsion aqueuse.

56. Poudre de polymère pouvant être obtenue par séchage d'une dispersion aqueuse de polymère selon la revendication 54.

57. Poudre de polymère pouvant être obtenue par séchage d'une dispersion aqueuse de polymère selon la revendication 42.
